(19) **Europäisches Patentamt / European Patent Office / Office européen des brevets**

(11) **EP 4 572 453 A1**

(12) **EUROPEAN PATENT APPLICATION**
published in accordance with Art. 153(4) EPC

(43) Date of publication:
**18.06.2025  Bulletin 2025/25**

(21) Application number: **23853080.2**

(22) Date of filing: **11.08.2023**

(51) International Patent Classification (IPC):
**H04W 72/02** (2009.01)     **H04W 72/04** (2023.01)
**H04W 72/542** (2023.01)     **H04W 72/53** (2023.01)
**H04W 72/56** (2023.01)     **H04W 28/26** (2009.01)
**H04L 1/18** (2023.01)

(52) Cooperative Patent Classification (CPC):
**H04L 1/18; H04W 28/26; H04W 72/02;
H04W 72/04; H04W 72/53; H04W 72/542;
H04W 72/56**

(86) International application number:
**PCT/KR2023/011951**

(87) International publication number:
**WO 2024/035214 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022  US 202263397373 P
11.10.2022  KR 20220130058
11.10.2022  US 202263415270 P
06.11.2022  US 202263423042 P
16.11.2022  US 202263425957 P
06.04.2023  US 202363457787 P**

(71) Applicant: **LG Electronics Inc.
Yeongdeungpo-gu
Seoul 07336 (KR)**

(72) Inventors:
• **LEE, Seungmin
  Seoul 06772 (KR)**
• **SEO, Hanbyul
  Seoul 06772 (KR)**

(74) Representative: **Plasseraud IP
104 Rue de Richelieu
CS92104
75080 Paris Cedex 02 (FR)**

(54) **METHOD AND DEVICE FOR SUPPORTING COEXISTENCE OF NR SL AND LTE SL**

(57)     A method of operating a first device (100) in a wireless communication system is proposed. The method may comprise the steps of: obtaining information about a long-term evolution (LTE) sidelink (SL) resource reserved by a second device (200); obtaining an SL reference signal received power (RSRP) value associated with the LTE SL resource; and based on that the SL RSRP value exceeds a first threshold, selecting a first new radio (NR) SL resource having an associated physical sidelink feedback channel (PSFCH) transmission opportunity which does not overlap that of the LTE SL resource.

**FIG. 13**

obtaining information for an LTE SL resource that a second device reserved — S1310

obtaining an SL RSRP value related to an LTE SL resource — S1320

selecting a first NR SL resource whose related PSFCH transmission occasion is not overlapped with an LTE SL resource in time domain, based on an SL RSRP value exceeding a first threshold value — S1330

EP 4 572 453 A1

## Description

## TECHNICAL FIELD

This disclosure relates to a wireless communication system.

## BACKGROUND

Sidefink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

## DISCLOSURE

## TECHNICAL SOLUTION

According to an embodiment of the present disclosure, a method for performing, by a first device, wireless communication may be proposed. For example, the method may comprise: obtaining information for a long term evolution, LTE, sidelink, SL, resource that a second device reserved; obtaining an SL reference signal received power, RSRP, value related to the LTE SL resource; and selecting a first new radio, NR, SL resource whose related physical sidelink feedback channel, PSFCH, transmission occasion is not overlapped with the LTE SL resource in time domain, based on the SL RSRP value exceeding a first threshold value.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: obtaining information for a long term evolution, LTE, sidelink, SL, resource that a second device reserved; obtaining an SL reference signal received power, RSRP, value related to the LTE SL resource; and selecting a first new radio, NR, SL resource whose related physical sidelink feedback channel, PSFCH, transmission occasion is not overlapped with the LTE SL resource in time domain, based on the SL RSRP value exceeding a first threshold value.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: obtaining information for a long term evolution, LTE, sidelink, SL, resource that a second device reserved; obtaining an SL reference signal received power, RSRP, value related to the LTE SL resource; and selecting a first new radio, NR, SL resource whose related physical sidelink feedback channel, PSFCH, transmission occasion is not overlapped with the LTE SL resource in time domain, based on the SL RSRP value exceeding a first threshold value.

According to an embodiment of the present disclosure, a non-transitory computer-readable storage medium storing instructions may be proposed. For example, the instructions, based on being executed, may cause a first device to: obtain information for a long term evolution, LTE, sidelink, SL, resource that a second device reserved; obtain an SL reference signal received power, RSRP, value related to the LTE SL resource; and select a first new radio, NR, SL resource whose related physical sidelink feedback channel, PSFCH, transmission occasion is not overlapped with the LTE SL resource in time domain, based on the SL RSRP value exceeding a first threshold value.

According to an embodiment of the present disclosure, a method for performing, by a second device, wireless communication may be proposed. For example, the method may comprise: receiving, from a first device, sidelink control information, SCI, for scheduling of a physical sidelink shared channel, PSSCH, through a physical sidelink control channel, PSCCH, based on a first new radio, NR, SL resource; and receiving, from the first device, a medium access control, MAC, protocol data unit, PDU, through the PSSCH based on the first NR SL resource, wherein a physical sidelink feedback channel, PSFCH, transmission occasion related to the first NR SL resource may be not overlapped with a long term evolution, LTE, SL resource in time domain, and wherein the first NR SL resource may be selected based on an SL reference signal received power, RSRP, value related to the LTE SL resource exceeding a first threshold value.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, sidelink control information, SCI, for scheduling of a physical sidelink shared channel, PSSCH, through a physical sidelink control channel, PSCCH, based on a first new radio, NR, SL resource; and receiving, from the first device, a medium access control, MAC, protocol data unit, PDU, through the PSSCH based on the first NR SL resource, wherein a physical sidelink feedback channel, PSFCH, transmission occasion related to the first NR SL resource may be not overlapped with a long term evolution, LTE, SL resource in time domain, and the first NR SL resource may be selected based on an SL reference signal received power, RSRP, value related to the LTE SL resource exceeding a first threshold value.

**BRIEF DESCRIPTION OF THE DRAWINGS**

FIG. 1 shows a communication structure that can be provided in a 6G system, according to one embodiment of the present disclosure.
FIG. 2 shows an electromagnetic spectrum, according to one embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows a method in which a UE that has reserved transmission resource(s) informs another UE of the transmission resource(s), based on an embodiment of the present disclosure.
FIG. 11 shows NR SL resources overlapping an LTE SL resource and the related NR SL transmit power, according to one embodiment of the present disclosure.
FIG. 12 shows an NR PSFCH resource overlapping with an LTE SL resource, according to one embodiment of the present disclosure.
FIG. 13 shows a procedure for a first device to perform wireless communication, according to one embodiment of the present disclosure.
FIG. 14 shows a procedure for a second device to perform wireless communication, according to one embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

**MODE FOR INVENTION**

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".
A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".
In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

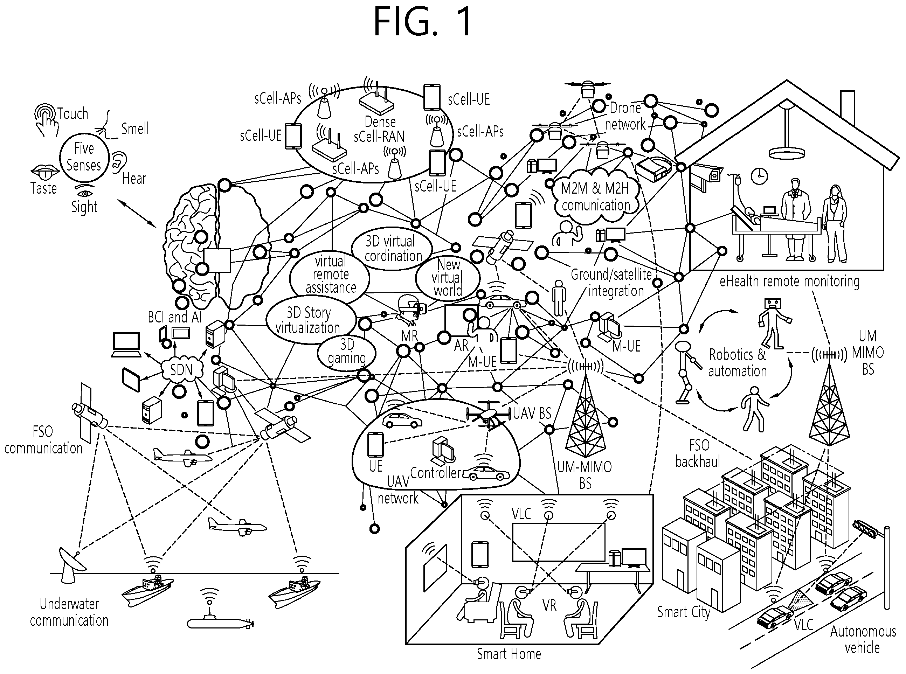

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.

- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

The following describes the core implementation technologies for 6G systems.

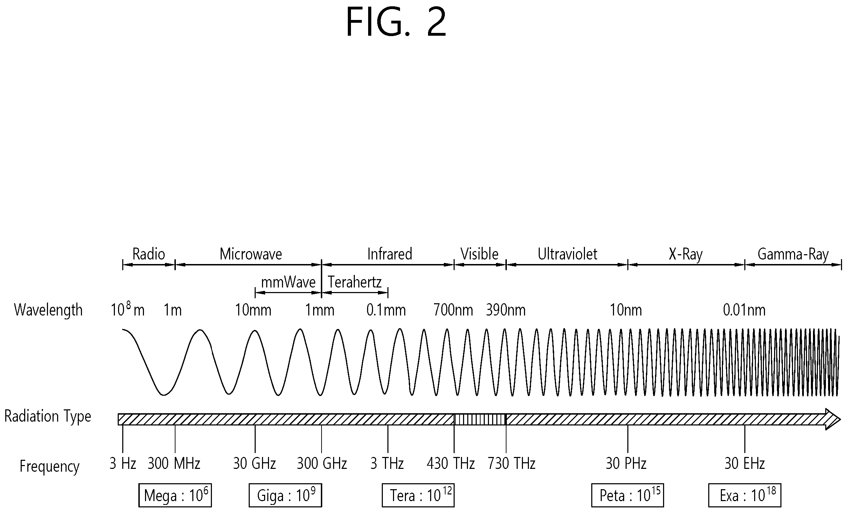

- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.

- Large-scale MIMO
- HBF, Hologram Beamforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

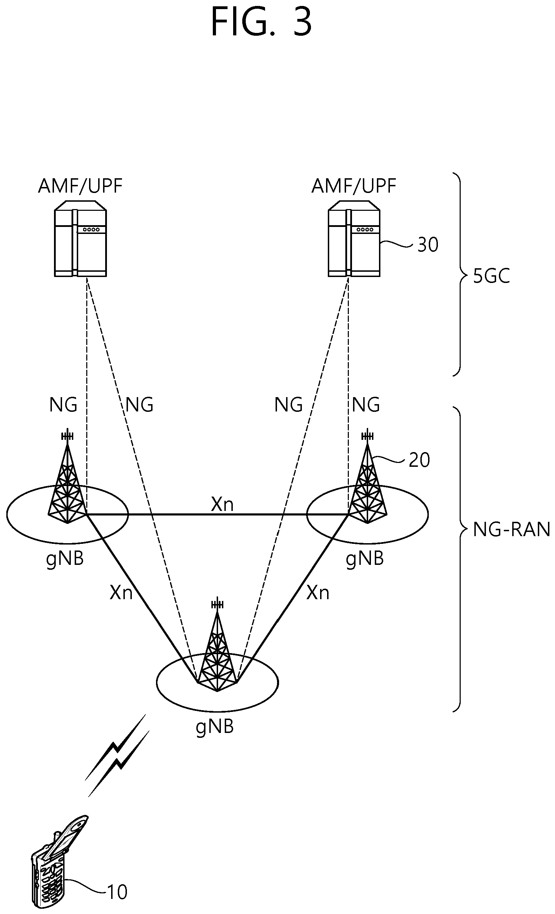

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

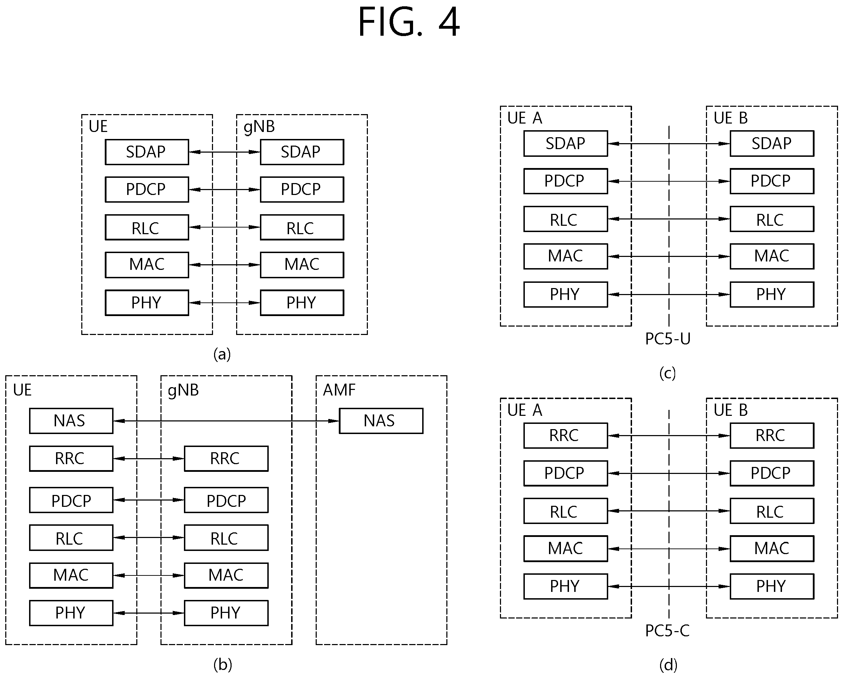

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

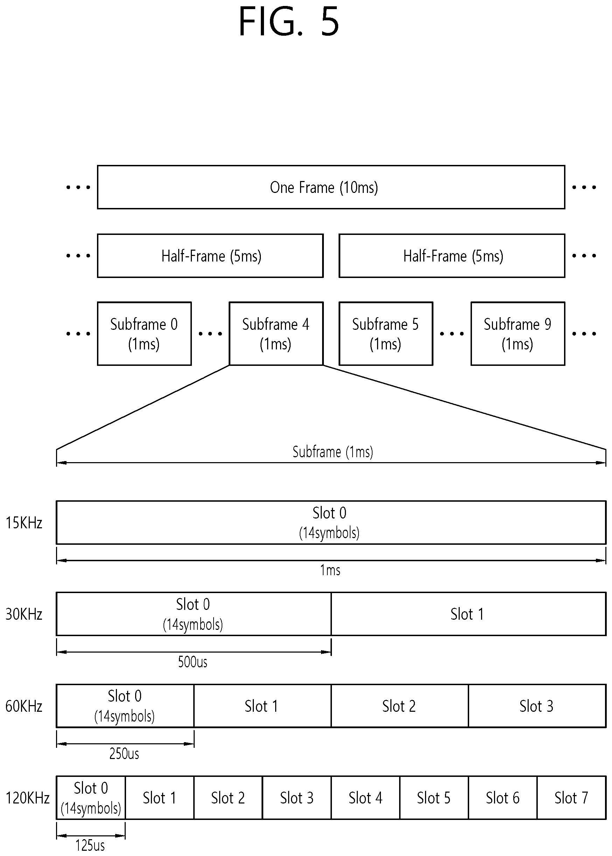

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), number of slots per frame ($N^{frame,u}_{slot}$), and number of slots per subframe ($N^{subframe,u}_{slot}$), depending on the SCS configuration (u), when Normal CP or Extended CP is used.

[Table 2]

| CP type | SCS (15*2$^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
| --- | --- | --- |
| FR1 | 410MHz - 7125MHz | 15, 30, 60kHz |
| FR2 | 24250MHz - 52600MHz | 60, 120, 240kHz |

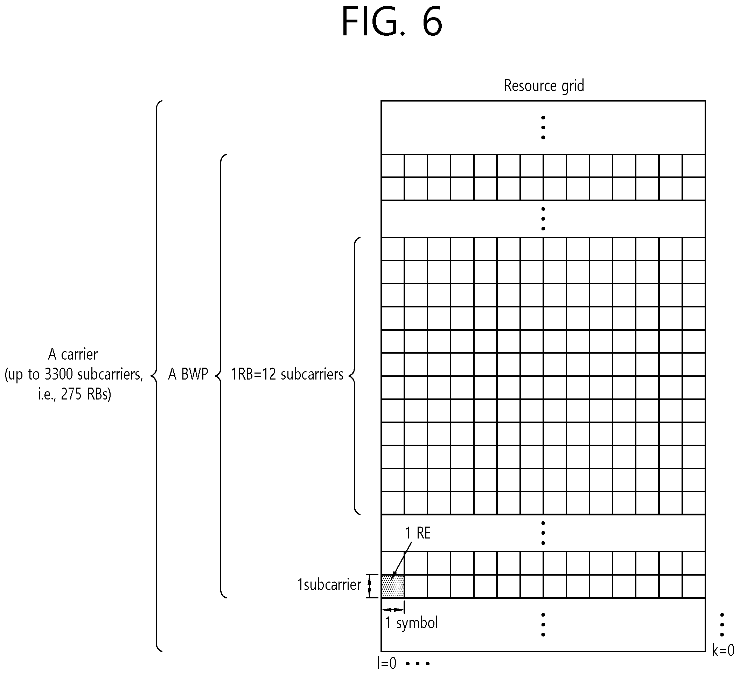

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

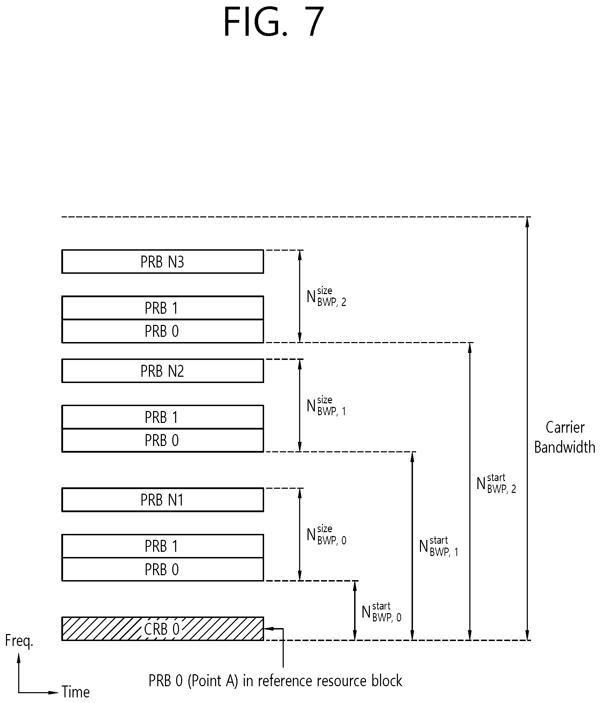

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

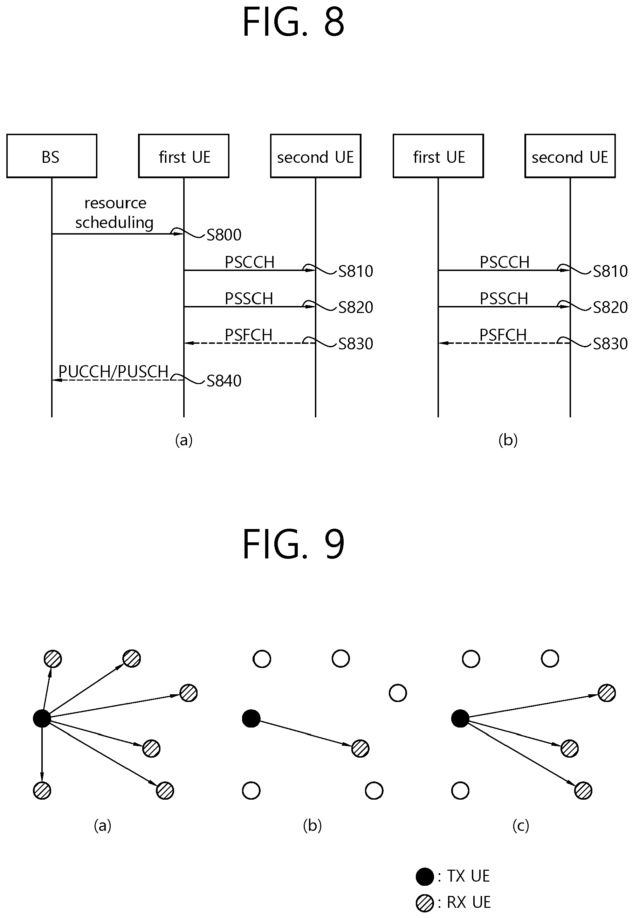

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- determining subsets of resources requested by higher layer before or after the slot $r_i'' - T_3$ is according to UE implementation. Here, $r_i''$ is a slot with the smallest slot index among $(r_0, r_1, r_2, ...)$ and $(r'_0, r'_1, r'_2, ...)$, $T_3$ is the same as $T^{SL}_{proc,1}$. Here, $T^{SL}_{proc,1}$ is defined as slots of Table X1, here $\mu_{SL}$ is an SCS configuration of SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ may denote the set of slots which belongs to the sidelink resource pool.

For example, a UE may select a set of candidate resources (Sa) based on Table 5. For example, when resource (re)selection is triggered, a UE may select a candidate resource set (Sa) based on Table 5. For example, when re-evaluation or pre-emption is triggered, a UE may select a candidate resource set (Sa) based on Table 5.

The UE may perform the operations in the following steps, based on the decoded PSCCH and the RSRP measured on the slots.

[Table 5]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. $C_{resel}$ is determined by $C_{resel}=10*SL\_RESOURCE\_RESELECTION\_COUNTER$, where SL_RESOURCE_RESELECTION_COUNTER is provided by higher layers.

...

If partial sensing is configured by higher layers then the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where j = 0, ... , $L_{subCH}$ - 1. The UE shall determine by its implementation a set of subframes which consists of at least Y subframes within the time interval [n + $T_1$, n + $T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where i = (a - 1) * 8 + b.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.

- PSSCH-RSRP measurement according to the received SCI format 1 is higher than $Th_{prio_{TX}, prio_{RX}}$.

- the SCI format received in subframe $t_m^{SL}$ or the same SCI format 1 which is assumed to be received in subframe(s) $t_{m+q \times P_{step} \times P_{rsvp_{RX}}}^{SL}$ determines according to 14.1.1.4C the set of resource blocks and subframes which overlaps with $R_{x,y+j \times P'_{rsvp\_TX}}$ for q=1, 2, ..., Q and j=0, 1, ..., $C_{resel}$ - 1. Here, $Q = \dfrac{1}{P_{rsvp\_RX}}$ if $P_{rsvp\_RX}$ and y' - m $\leq$ $P_{step} \times P_{rsvp\_RX} + P_{step}$, where $t_{y'}^{SL}$ is the last subframe of the Y subframes , and Q = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

Meanwhile, partial sensing may be supported for power saving of the UE. For example, in LTE SL or LTE V2X, the UE may perform partial sensing based on Tables 6 and 7.

[Table 6]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

(continued)

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. $C_{resel}$ is determined by $C_{resel}$ =10*SL_RESOURCE_RESELECTION_COUNTER, where SL_RESOURCE_RESELECTION_COUNTER is provided by higher layers.

...

If partial sensing is configured by higher layers then the following steps are used:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0, ... , L_{subCH}$ - 1. The UE shall determine by its implementation a set of subframes which consists of at least Y subframes within the time interval [n + $T_1$, n + $T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where i = (*a* - 1) * 8 + *b*.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.
- PSSCH-RSRP measurement according to the received SCI format 1 is higher than $Th_{prio_{TX}, prio_{RX}}$.
- the SCI format received in subframe $t_m^{SL}$ or the same SCI format 1 which is assumed to be received in subframe(s) $t_{m+q \times P_{step} \times P_{rsvp_{RX}}}^{SL}$ determines according to 14.1.1.4C the set of resource blocks and subframes which overlaps with $R_{x,y+j \times P'_{rsvp\_TX}}$ for q=1, 2, ..., Q and j=0, 1, ..., $C_{resel}$ - 1. Here, $Q = \frac{1}{P_{rsvp\_RX}}$ if $P_{rsvp\_RX}$ and y' - m $\leq$ $P_{step} \times P_{rsvp\_RX} + P_{step}$, where $t_{y'}^{SL}$ is the last subframe of the $Y$ subframes , and Q = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 7]

7) For a candidate single-subframe resource $R_{x,y}$ remaining in the set $S_A$, the metric $E_{x,y}$ is defined as the linear average of S-RSSI measured in sub-channels $x+k$ for $k = 0, ..., L_{subCH}$ - 1 in the monitored subframes in Step 2 that can be expressed by $t_{y-P_{step}*j}^{SL}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

(continued)

> If transmission based on random selection is configured by upper layers and when the UE is configured by upper layers to transmit using resource pools on multiple carriers, the following steps are used:
>
> 1) A candidate single-subframe resource for PSSCH transmission $R_{x,y}$ is defined as a set of $L_{subCH}$ contiguous sub-channels with sub-channel $x+j$ in subframe $t_y^{SL}$ where j = 0, ... , $L_{subCH}$ - 1. The UE shall assume that any set of $L_{subCH}$ contiguous sub-channels included in the corresponding PSSCH resource pool within the time interval [n + $T_1$, n + $T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.
>
> 2) The set $S_A$ is initialized to the union of all the candidate single-subframe resources. The set $S_B$ is initialized to an empty set.
>
> 3) The UE moves the candidate single-subframe resource $R_{x,y}$ from the set $S_A$ to $S_B$.
>
> 4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time. The UE shall report set $S_B$ to higher layers.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 8
- Beta_offset indicator - 2 bits as provided by higher layer parameter sl-BetaOffsets2ndSCI
- Number of DMRS port - 1 bit as defined in Table 9
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 8]

| Value of 2nd-stage SCI format field | 2nd-stage SCI format |
|---|---|
| 00 | SCI format 2-A |

(continued)

| Value of 2nd-stage SCI format field | 2nd-stage SCI format |
|---|---|
| 01 | SCI format 2-B |
| 10 | Reserved |
| 11 | Reserved |

[Table 9]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 10
- CSI request - 1 bit

[Table 10]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

The following describes a UE procedure to report HARQ-ACK on a sidelink.

A UE may be instructed by SCI format that schedules a reception of PSSCH on one or more subchannels from $N^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot $t'^{SL}_k$ ($0 \leq k < T'_{max}$) if $k \bmod N^{PSFCH}_{PSSCH} = 0$, where $t'^{SL}_k$ is a slot in the resource pool, and $T'_{max}$ is the number of slots in the resource pool within 10240 msec, and $N^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with $M^{PSFCH}_{PRB,set}$ of PRBs in a resource pool for PSFCH transmissions on PRBs in the resource pool. For the number of PSSCH slots related to a PSFCH slot that is less than or equal to $N_{subch}$ and $N^{PSFCH}_{PSSCH}$, the number of subchannels for the resource pool provided by sl-NumSubchannel, a UE allocates the PRB $[(i+j \cdot N^{PSFCH}_{PSSCH}) \cdot M^{PSFCH}_{subch,slot}, (i+1+N^{PSFCH}_{PSSCH}) \cdot M^{PSFCH}_{subch,slot}-1]$ among the $M^{PSFCH}_{PRB,set}$ PRB for slot i and subchannel j among the PSSCH slots associated with the PSFCH slot. Here, $M^{PSFCH}_{subch,slot} = M^{PSFCH}_{PRB,set} / (N_{subch} \cdot N^{PSFCH}_{PSSCH})$, $0 \leq i < N^{PSFCH}_{PSSCH}$, $0 \leq j < N_{subch}$, and the allocations starts in ascending order for i and continues in ascending order for j. A UE expects $M^{PSFCH}_{PRB,set}$ to be a multiple of $N_{subch} \cdot N^{PSFCH}_{PSSCH}$.

A UE determines the number of available PSFCH resources for multiplexing HARQ-ACK information included in a PSFCH transmission as $R^{PSFCH}_{PRB,CS} = N^{PSFCH}_{type} \cdot M^{PSFCH}_{subch,slot} \cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,
- $N^{PSFCH}_{type} = N^{PSSCH}_{subch}$ and $N^{PSSCH}_{subch} \cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type} \cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID}) \bmod R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 11.

[Table 11]

| $N^{PSFCH}_{CS}$ | $m_0$ | | | | | |
| --- | --- | --- | --- | --- | --- | --- |
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 12, when a UE detects SCI format 2-A with a cast type indicator field value of "01" or "10", or as shown in Table 13, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 12]

| HARQ-ACK Value | 0 (NACK) | 1 (ACK) |
|---|---|---|
| Sequence cyclic shift | 0 | 6 |

[Table 13]

| HARQ-ACK Value | 0 (NACK) | 1 (ACK) |
|---|---|---|
| Sequence cyclic shift | 0 | N/A |

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure. Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Since overlapping frequency bands exist between LTE and NR, the presence of two RATs in the same channel may be possible. Since NR supports PSFCH and HARQ feedback for multiple PSSCHs may be transmitted on a PSFCH resource, which can generate large power, AGC saturation problems may occur when LTE resources occupied before the PSFCH resource overlap with NR PSFCH resources. For example, if an NR SL module (or device) excludes all NR SL candidate resources for PSFCH transmission occasions that overlap in time domain with LTE SL reserved resources in order to reduce the probability of AGC problems at the LTE receiving UE, the amount of remaining selectable NR SL candidate resources may be excessively reduced, resulting in an increased probability of NR SL transmission resource collisions between different NR SL UEs (with similar NR SL sensing results).

If the SCS value is configured differently between LTE SL and NR SL (e.g. NR SL with 30KHZ SCS), the NR SL transmit power is different between the first NR SL slot and the remaining (after second) NR SL slots that overlap with the LTE SL subframe, the LTE receiving UE may experience AGC problems in receiving packets on that LTE SL subframe.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in an unlicensed band, in order to simplify the channel sensing, it may be informed through the channel occupancy time (COT) duration information that it occupies the channel obtained through the initial general channel sensing for a certain period of time, and the maximum value of the length of the COT duration may be set differently according to the priority value of a service or a data packet or channel access priority class (CAPC).

On the one hand, a base station may share a COT duration that it has secured through channel sensing in the form of a DCI transmission, and a UE may perform a specific (indicated) channel sensing type and/or CP extension within the COT duration based on the DCI information received from the base station. On the other hand, a UE may share a COT duration that it has secured through channel sensing to a base station that is the destination of the UE's UL transmission, and the relevant information may be provided through the UL via CG-UCI. In the above situation, the base station may perform simplified channel sensing within the COT duration shared by the UE.

In the case of SL communication, there are situations where a UE is indicated by a base station to use resources for SL transmission through DCI or RRC signaling, such as Mode 1 RA operation, and there are situations where a UE performs SL transmission and reception through sensing operation between UEs without the assistance of a base station, such as Mode 2 RA operation.

On the other hand, for channel access type 1, which can be used regardless of the channel occupancy time (COT) configuration, the procedures shown in Table 14 and Table 15 for DL transmissions and Table 16 and Table 17 for UL transmissions were performed.

In the present disclosure, channel access may be mutually replaceable/substitutable with channel sensing.

[Table 14]

The eNB/gNB may transmit a transmission after first sensing the channel to be idle during the sensing slot durations of a defer duration $T_d$ and after the counter $N$ is zero in step 4. The counter $N$ is adjusted by sensing the channel for additional sensing slot duration(s) according to the steps below:

1) set $N = N_{init}$, where $N_{init}$ is a random number uniformly distributed between 0 and $CW_p$, and go to step 4;

2) if $N > 0$ and the eNB/gNB chooses to decrement the counter, set $N = N - 1$;

3) sense the channel for an additional sensing slot duration, and if the additional sensing slot duration is idle, go to step 4; else, go to step 5;

4) if $N = 0$, stop; else, go to step 2.

5) sense the channel until either a busy sensing slot is detected within an additional defer duration $T_d$ or all the sensing slots of the additional defer duration $T_d$ are detected to be idle;

6) if the channel is sensed to be idle during all the sensing slot durations of the additional defer duration $T_d$, go to step 4; else, go to step 5;

If an eNB/gNB has not transmitted a transmission after step 4 in the procedure above, the eNB/gNB may transmit a transmission on the channel, if the channel is sensed to be idle at least in a sensing slot duration $T_{sl}$ when the eNB/gNB is ready to transmit and if the channel has been sensed to be idle during all the sensing slot durations of a defer duration $T_d$ immediately before this transmission. If the channel has not been sensed to be idle in a sensing slot duration $T_{sl}$ when the eNB/gNB first senses the channel after it is ready to transmit or if the channel has been sensed to be not idle during any of the sensing slot durations of a defer duration $T_d$ immediately before this intended transmission, the eNB/gNB proceeds to step 1 after sensing the channel to be idle during the sensing slot durations of a defer duration $T_d$.

The defer duration $T_d$ consists of duration $T_f = 16us$ immediately followed by $m_p$ consecutive sensing slot durations $T_{sl}$, and $T_f$ includes an idle sensing slot duration $T_{sl}$ at start of $T_f$

[Table 15]

If a gNB transmits transmissions including PDSCH that are associated with channel access priority class p on a channel, the gNB maintains the contention window value $CW_p$ and adjusts $CW_p$ before step 1 of the procedure described in clause 4.1.1 for those transmissions using the following steps:

1) For every priority class $p \in \{1,2,3,4\}$, set $CW_p = CW_{min,p}$.

2) If HARQ-ACK feedback is available after the last update of $W_p$, go to step 3. Otherwise, if the gNB transmission after procedure described in clause 4.1.1 does not include a retransmission or is transmitted within a duration $T_w$ from the end of the *reference duration* corresponding to the earliest DL channel occupancy after the last update of $CW_p$, go to step 5; otherwise go to step 4.

3) The HARQ-ACK feedback(s) corresponding to PDSCH(s) in the reference duration for the latest DL channel occupancy for which HARQ-ACK feedback is available is used as follows:

a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4.

4) Increase $CW_p$ for every priority class $p \in \{1,2,3,4\}$ to the next higher allowed value.

5) For every priority class $p \in \{1,2,3,4\}$, maintain $CW_p$ as it is; go to step 2.

The *reference duration* and duration $T_w$ in the procedure above are defined as follows:

- The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment.

- $T_W$ = max ($T_A$, $T_B$ + 1$ms$) where $T_B$ is the duration of the transmission burst from start of the *reference duration* in $ms$ and $T_A$ = 5$ms$ if the absence of any other technology sharing the channel can not be guaranteed on a long-term basis (e.g. by level of regulation), and $T_A$ = 10$ms$ otherwise.

If a gNB transmits transmissions using Type 1 channel access procedures associated with the channel access priority class $p$ on a channel and the transmissions are not associated with explicit HARQ-ACK feedbacks by the corresponding UE(s), the gNB adjusts $CW_p$ before step 1 in the procedures described in subclase 4.1.1, using the latest $CW_p$ used for any DL transmissions on the channel using Type 1 channel access procedures associated with the channel access priority class $p$. If the corresponding channel access priority class $p$ has not been used for any DL transmissions on the channel, $CW_p$ = $CW_{min,p}$ is used.

[Table 16]

A UE may transmit the transmission using Type 1 channel access procedure after first sensing the channel to be idle during the slot durations of a defer duration $T_d$, and after the counter $N$ is zero in step 4. The counter $N$ is adjusted by sensing the channel for additional slot duration(s) according to the steps described below.

1) set $N = N_{init}$, where $N_{init}$ is a random number uniformly distributed between 0 and $CW_p$, and go to step 4;

2) if $N > 0$ and the UE chooses to decrement the counter, set $N = N - 1$;

3) sense the channel for an additional slot duration, and if the additional slot duration is idle, go to step 4; else, go to step 5;

4) if $N = 0$, stop; else, go to step 2.

5) sense the channel until either a busy slot is detected within an additional defer duration $T_d$ or all the slots of the additional defer duration $T_d$ are detected to be idle;

6) if the channel is sensed to be idle during all the slot durations of the additional defer duration $T_d$, go to step 4; else, go to step 5;

If a UE has not transmitted a UL transmission on a channel on which UL transmission(s) are performed after step 4 in the procedure above, the UE may transmit a transmission on the channel, if the channel is sensed to be idle at least in a sensing slot duration $T_{sl}$ when the UE is ready to transmit the transmission and if the channel has been sensed to be idle during all the slot durations of a defer duration $T_d$ immediately before the transmission. If the channel has not been sensed to be idle in a sensing slot duration $T_{sl}$ when the UE first senses the channel after it is ready to transmit, or if the channel has not been sensed to be idle during any of the sensing slot durations of a defer duration $T_d$ immediately before the intended transmission, the UE proceeds to step 1 after sensing the channel to be idle during the slot durations of a defer duration $T_d$.

The defer duration $T_d$ consists of duration $T_f$ = 16us immediately followed by $m_p$ consecutive slot durations where each slot duration is $T_{sl}$ = 9us, and $T_f$ includes an idle slot duration $T_{sl}$ at start of $T_f$.

[Table 17]

If a UE transmits transmissions using Type 1 channel access procedures that are associated with channel access priority class $p$ on a channel, the UE maintains the contention window value $CW_p$ and adjusts $CW_p$ for those transmissions before step 1 of the procedure described in clause 4.2.1.1, using the following steps:

1) For every priority class $p \in \{1,2,3,4\}$, set $CW_p = CW_{min,p}$;

2) If HARQ-ACK feedback is available after the last update of $CW_p$, go to step 3. Otherwise, if the UE transmission after procedure described in clause 4.2.1.1 does not include a retransmission or is transmitted within a duration $T_W$ from the end of the *reference duration* corresponding to the earliest UL channel occupancy after the last update of $CW_p$, go to step 5; otherwise go to step 4.

3) The HARQ-ACK feedback(s) corresponding to PUSCH(s) in the *reference duration* for the latest UL channel occupancy for which HARQ-ACK feedback is available is used as follows:

(continued)

a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4.

4) Increase $CW_p$ for every priority class $p \in \{1,2,3,4\}$ to the next higher allowed value;

5) For every priority class $p \in \{1,2,3,4\}$, maintain $CW_p$ as it is; go to step 2.

The HARQ-ACK feedback, *reference duration* and duration $T_w$ in the procedure above are defined as the following:

- For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows:

  - If a new transmission is indicated, 'ACK' is assumed for the transport blocks or code block groups in the corresponding PUSCH(s) for the TB-based and CBG-based transmission, respectively.

  - If a retransmission is indicated for TB-based transmissions, 'NACK' is assumed for the transport blocks in the corresponding PUSCH(s).

  - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively.

- The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment.

- $T_w = \max(T_A, T_B + 1ms)$ where $T_B$ is the duration of the transmission burst from start of the *reference duration* in ms and $T_A = 5ms$ if the absence of any other technology sharing the channel cannot be guaranteed on a long-term basis (e.g. by level of regulation), and $T_A = 10ms$ otherwise.

On the other hand, within the channel occupancy time (COT), the simplified channel access type 2 can be used before transmission, and the procedure as shown in Table 18 for DL transmission and Table 19 for UL transmission is performed.

[Table 18]

4.1.2 Type 2 DL channel access procedures

This clause describes channel access procedures to be performed by an eNB/gNB where the time duration spanned by sensing slots that are sensed to be idle before a downlink transmission(s) is deterministic.

If an eNB performs Type 2 DL channel access procedures, it follows the procedures described in clause 4.1.2.1.

Type 2A channel access procedures as described in clause 4.1.2.1 are only applicable to the following transmission(s) performed by an eNB/gNB:

- Transmission(s) initiated by an eNB including discovery burst and not including PDSCH where the transmission(s) duration is at most 1*ms*, or

- Transmission(s) initiated by a gNB with only discovery burst or with discovery burst multiplexed with non-unicast information, where the transmission(s) duration is at most 1*ms*, and the discovery burst duty cycle is at most 1/20, or

- Transmission(s) by an eNB/ gNB following transmission(s) by a UE after a gap of 25us in a shared channel occupancy as described in clause 4.1.3.

Type 2B or Type 2C DL channel access procedures as described in clause 4.1.2.2 and 4.1.2.3, respectively, are applicable to the transmission(s) performed by a gNB following transmission(s) by a UE after a gap of 16us or up to 16us, respectively, in a shared channel occupancy as described in clause 4.1.3.

4.1.2.1 Type 2A DL channel access procedures

An eNB/gNB may transmit a DL transmission immediately after sensing the channel to be idle for at least a sensing interval $T_{short\_dl}$ = 25$us$. $T_{short\_dl}$ consists of a duration $T_f$ = 16us immediately followed by one sensing slot and $T_f$ includes a sensing slot at start of $T_f$. The channel is considered to be idle for $T_{short\_dl}$ if both sensing slots of $T_{short\_dl}$ are sensed to be idle.

4.1.2.2 Type 2B DL channel access procedures

A gNB may transmit a DL transmission immediately after sensing the channel to be idle within a duration of $T_f$ = 16us. $T_f$ includes a sensing slot that occurs within the last 9us of $T_f$. The channel is considered to be idle within the duration $T_f$ if the channel is sensed to be idle for a total of at least 5$us$ with at least 4us of sensing occurring in the sensing slot.

4.1.2.3 Type 2C DL channel access procedures

When a gNB follows the procedures in this clause for transmission of a DL transmission, the gNB does not sense the channel before transmission of the DL transmission. The duration of the corresponding DL transmission is at most 584$us$.

[Table 19]

4.2.1.2 Type 2 UL channel access procedure

This clause describes channel access procedures by UE where the time duration spanned by the sensing slots that are sensed to be idle before a UL transmission(s) is deterministic. If a UE is indicated by an eNB to perform Type 2 UL channel access procedures, the UE follows the procedures described in clause 4.2.1.2.1.

4.2.1.2.1 Type 2A UL channel access procedure

If a UE is indicated to perform Type 2A UL channel access procedures, the UE uses Type 2A UL channel access procedures for a UL transmission. The UE may transmit the transmission immediately after sensing the channel to be idle for at least a sensing interval $T_{short\_ul}$ = 25$us$. $T_{short\_ul}$ consists of a duration $T_f$ = 16usimmediately followed by one sensing slot and $T_f$ includes a sensing slot at start of $T_f$. The channel is considered to be idle for $T_{short\_ul}$ if both sensing slots of $T_{short\_ul}$.are sensed to be idle.

4.2.1.2.2 Type 2B UL channel access procedure

If a UE is indicated to perform Type 2B UL channel access procedures, the UE uses Type 2B UL channel access procedure for a UL transmission. The UE may transmit the transmission immediately after sensing the channel to be idle within a duration of $T_f$ = 16us. $T_f$ includes a sensing slot that occurs within the last 9us of $T_f$. The channel is considered to be idle within the duration $T_f$ if the channel is sensed to be idle for total of at least 5$us$ with at least 4us of sensing occurring in the sensing slot.

4.2.1.2.3 Type 2C UL channel access procedure

If a UE is indicated to perform Type 2C UL channel access procedures for a UL transmission, the UE does not sense the channel before the transmission. The duration of the corresponding UL transmission is at most 584$us$.

According to one embodiment of the present disclosure, a type 2A SL channel access may be in the same manner as a type 2A DL and/or UL channel access, with a sensing interval of T_short_sl=25us and a T_f=16us interval immediately following the sensing interval comprised of one sensing slot, where T_f comprises a sensing slot at the beginning. As for the basic idle determination, the scheme of DL or UL may also be used.

According to one embodiment of the present disclosure, a Type 2B SL channel access may be in the same manner as a Type 2B DL and/or UL channel access, with a sensing interval of T_f =16us, where T_f includes a sensing slot at the end of the 9us interval. As for the basic idle determination, the DL or UL scheme may also be used.

According to one embodiment of the present disclosure, a Type 2C SL channel access may be in the same manner as a Type 2C DL and/or UL channel access, such that no channel sensing is performed. Instead, the time interval of the SL transmission may be up to 584us.

According to one embodiment of the present disclosure, a type 1 SL channel access is performed in the same manner as a type 1 DL and/or UL channel access, wherein: i) a random integer value N is derived based on a contention window size corresponding to the priority class, ii) if the channel sensing result for a defer duration of size T_d corresponding to the priority class is an idle, the counter value is decremented to N-1 with T_sl as the unit when it is idle; and iii) if the counter value is zero, the UE may occupy the RB set or channel subject to channel sensing.

However, if some of the channel sensing results for the above T_sl interval are determined to be idle, the counter value may be maintained and channel sensing may be continued until the channel sensing results in the unit of the defer duration of size T_d again become idle. In the above, the defer duration of length T_d may be in the form of m_p consecutive T_sl after T_f=16us, where m_p is a value determined according to the priority class p, and may be a time interval in which channel sensing is performed with T_sl=9us.

According to one embodiment of the present disclosure, when a UE has occupied a channel via a Type 1 SL channel access and the UE is not ready to transmit a sidelink transmission, the UE may configure a defer duration of length T_d and a sensing interval of length T_sl immediately preceding the ready-to-transmit sidelink transmission, and if both are idle, the UE may immediately perform the sidelink transmission. Here, if any of them are busy, the UE may perform the type 1 SL channel access again.

For example, if a sidelink transmission is difficult at the end of the channel sensing (e.g., if the end of the channel sensing is after the start of the sidelink transmission), the UE may reselect the sidelink transmission resource. For example, the reselected resource may be selected in consideration of the end time of the channel sensing and/or the length of the remaining sensing interval. For example, the remaining sensing interval may be a value derived by assuming that the channel sensing is all idle.

Meanwhile, in the present disclosure, a transmitting UE (i.e., TX UE) may be a UE which transmits data to (target) receiving UE(s) (i.e., RX UE(s)). For example, the transmitting UE may be a UE which performs PSCCH transmission and/or PSSCH transmission. For example, the transmitting UE may be a UE which transmits SL CSI-RS(s) and/or a SL CSI report request indication to (target) receiving UE(s). For example, the transmitting UE may be a UE which transmits a (pre-defined) reference signal(s) (e.g., PSSCH demodulation reference signal (DM-RS)) and/or SL (L1) RSRP report request indicator, which is/are used for SL (L1) RSRP measurement, to (target) to receiving UE(s). For example, the transmitting UE may be a UE which transmits a (control) channel (e.g., PSCCH, PSSCH, etc.) and/or reference signal(s) (e.g., DM-RS(s), CSI-RS(s), etc.) through the (control) channel, which is/are used for SL radio link monitoring (RLM) operation(s) and/or SL radio link failure (RLF) operation(s) of (target) receiving UE(s).

Meanwhile, in the present disclosure, a receiving UE (i.e., receiving UE) may be a UE which transmits SL HARQ feedback to transmitting UE(s) (i.e., transmitting UE(s)), based on whether or not data transmitted by transmitting UE(s) is decoded successfully and/or whether or not a PSCCH (related to PSSCH scheduling) transmitted by transmitting UE(s) is detected/decoded successfully. For example, the receiving UE may be a UE which performs SL CSI transmission to transmitting UE(s) based on SL CSI-RS(s) and/or a SL CSI report request indication received from transmitting UE(s). For example, the receiving UE may be a UE which transmits, to transmitting UE(s), an SL (L1) RSRP measurement value measured based on (pre-defined) reference signal(s) and/or SL (L1) RSRP report request indication received from transmitting UE(s). For example, the receiving UE may be a UE which transmits its own data to transmitting UE(s). For example, the receiving UE may be a UE which performs SL RLM operation(s) and/or SL RLF operation(s) based on a (pre-configured) (control) channel and/or reference signal(s) through the (control) channel received from transmitting UE(s).

According to one embodiment of the present disclosure, when a receiving UE transmits SL HARQ feedback information for a PSSCH (and/or PSCCH) received from a transmitting UE, some of the below schemes may be considered. For example, the scheme (part of the scheme) may be applied limitedly only when the receiving UE has successfully decoded/detected the PSCCH for which the PSSCH is scheduled.

- option 1) transmitting NACK information only when PSSCH decoding/reception is failed
- option 2) transmitting ACK information when PSSCH decoding/reception is successful, and transmitting NACK information when it is failed

Meanwhile, in the present disclosure, a transmitting UE may transmit the entirety or part of information described below to receiving UE(s) through SCI(s). Herein, for example, the transmitting UE may transmit the entirety or part of the information described below to the receiving UE(s) through a first SCI and/or a second SCI.

- PSSCH (and/or PSCCH) related resource allocation information (e.g., the number/positions of time/frequency resources, resource reservation information (e.g., period))
- SL CSI report request indicator or SL (L1) RSRP (and/or SL (L1) RSRQ and/or SL (L1) RSSI) report request indicator
- SL CSI transmission indicator (or SL (L1) RSRP (and/or SL (L1) RSRQ and/or SL (L1) RSSI) information transmission indicator)) (on a PSSCH)
- Modulation and coding scheme (MCS) information
- Transmit power information
- L1 destination ID information and/or L1 source ID information
- SL HARQ process ID information
- New data indicator (NDI) information
- Redundancy version (RV) information
- (Transmission traffic/packet related) QoS information (e.g., priority information)
- SL CSI-RS transmission indicator or information on the number of (to-be-transmitted) SL CSI-RS antenna ports
- Location information of the transmitting UE or location (or distance region) information of target receiving UE(s) (for which SL HARQ feedback is requested)

- Reference signal (e.g., DM-RS, etc.) information related to channel estimation and/or decoding of data to be transmitted through a PSSCH. For example, the reference signal information may be information related to a pattern of a (time-frequency) mapping resource of DM-RS, rank information, antenna port index information, information on the number of antenna ports, etc.

Meanwhile, in the present disclosure, for example, a PSCCH may be replaced/substituted with at least one of a SCI, a first SCI (1st-stage SCI), and/or a second SCI (2nd-stage SCI), or vice versa. For example, a SCI may be replaced/substituted with at least one of a PSCCH, a first SCI, and/or a second SCI, or vice versa. For example, a PSSCH may be replaced/substituted with a second SCI and/or a PSCCH, or vice versa.

Meanwhile, in the present disclosure, for example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the 1st SCI and the 2nd SCI may be transmitted through different channels. For example, the transmitting UE may transmit the first SCI to the receiving UE through the PSCCH. For example, the second SCI may be transmitted to the receiving UE through an (independent) PSCCH, or may be transmitted in a piggyback manner together with data through the PSSCH.

Meanwhile, in the present disclosure, for example, "configuration" or "definition" may mean (pre-)configuration from base station(s) or network(s). For example, "configuration" or "definition" may mean resource pool specific (pre-)configuration from base station(s) or network(s). For example, base station(s) or network(s) may transmit information related to "configuration" or "definition" to UE(s). For example, base station(s) or network(s) may transmit information related to "configuration" or "definition" to UE(s) through pre-defined signaling. For example, the pre-defined signaling may include at least one of RRC signaling, MAC signaling, PHY signaling, and/or SIB.

Meanwhile, in the present disclosure, for example, "configuration" or "definition" may mean that it is designated or configured through pre-configured signaling between UEs. For example, information related to "configuration" or "definition" may be transmitted or received pre-configured signaling between UEs. For example, the pre-defined signaling may include at least one of RRC signaling, MAC signaling, PHY signaling, and/or SIB.

Meanwhile, in the present disclosure, for example, RLF may be replaced/substituted with out-of-synch (OOS) and/or in-synch (IS), or vice versa.

Meanwhile, in the present disclosure, for example, a resource block (RB) may be replaced/substituted with a subcarrier, or vice versa. For example, a packet or a traffic may be replaced/substituted with a transport block (TB) or a medium access control protocol data unit (MAC PDU) according to a transmission layer, or vice versa. For example, a code block group (CBG) may be replaced/substituted with a TB, or vice versa. For example, a source ID may be replaced/substituted with a destination ID, or vice versa. For example, an L1 ID may be replaced/substituted with an L2 ID, or vice versa. For example, the L1 ID may be an L1 source ID or an L1 destination ID. For example, the L2 ID may be an L2 source ID or an L2 destination ID.

Meanwhile, in the present disclosure, for example, operation(s) of a transmitting UE to reserve/select/determine retransmission resource(s) may include operation(s) of the transmitting UE to reserve/select/determine potential retransmission resource(s) in which actual use is determined based on SL HARQ feedback information received from receiving UE(s).

Meanwhile, in the present disclosure, a sub-selection window may be replaced/substituted with a selection window and/or a pre-configured number of resource sets within the selection window, or vice versa.

Meanwhile, in the present disclosure, SL MODE 1 may refer to a resource allocation method or a communication method in which a base station directly schedules SL transmission resource(s) for a transmitting UE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a UE performing SL communication based on SL MODE 1 may be referred to as a MODE 1 UE or MODE 1 transmitting UE, and a UE performing SL communication based on SL MODE 2 may be referred to as a MODE 2 UE or MODE 2 transmitting UE.

Meanwhile, in the present disclosure, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in the CG type 1, a grant may be provided by RRC signaling and may be stored as a configured grant. For example, in the CG type 2, a grant may be provided by a PDCCH, and may be stored or deleted as a configured grant based on L1 signaling indicating activation or deactivation of the grant. For example, in the CG type 1, a base station may allocate periodic resource(s) to a transmitting UE through an RRC message. For example, in the CG type 2, a base station may allocate periodic resource(s) to a transmitting UE through an RRC message, and the base station may dynamically activate or deactivate the periodic resource(s) through a DCI.

Meanwhile, in the present disclosure, a channel may be replaced/substituted with a signal, or vice versa. For example, transmission/reception of a channel may include transmission/reception of a signal. For example, transmission/reception of a signal may include transmission/reception of a channel. For example, cast may be replaced/substituted with at least one of unicast, groupcast, and/or broadcast, or vice versa. For example, a cast type may be replaced/substituted with at least one of unicast, groupcast, and/or broadcast, or vice versa. For example, the cast or the cast type may include unicast, groupcast and/or broadcast.

Meanwhile, in the present disclosure, a resource may be replaced/substituted with a slot or a symbol, or vice versa. For example, the resource may include a slot and/or a symbol.

Meanwhile, in the present disclosure, a priority may be replaced/substituted with at least one of logical channel prioritization (LCP), latency, reliability, minimum required communication range, prose per-packet priority (PPPP), sidelink radio bearer (SLRB), a QoS profile, a QoS parameter, and/or requirement, or vice versa.

Meanwhile, in the present disclosure, for example, for convenience of description, a (physical) channel used when a receiving UE transmits at least one of the following information to a transmitting UE may be referred to as a PSFCH.

- SL HARQ feedback, SL CSI, SL (L1) RSRP

Meanwhile, when performing sidelink communication, a method for a transmitting UE to reserve or pre-determine transmission resource(s) for receiving UE(s) may be representatively as follows.

For example, the transmitting UE may perform a reservation of transmission resource(s) based on a chain. Specifically, for example, if the transmitting UE reserves K transmission resources, the transmitting UE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving UE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

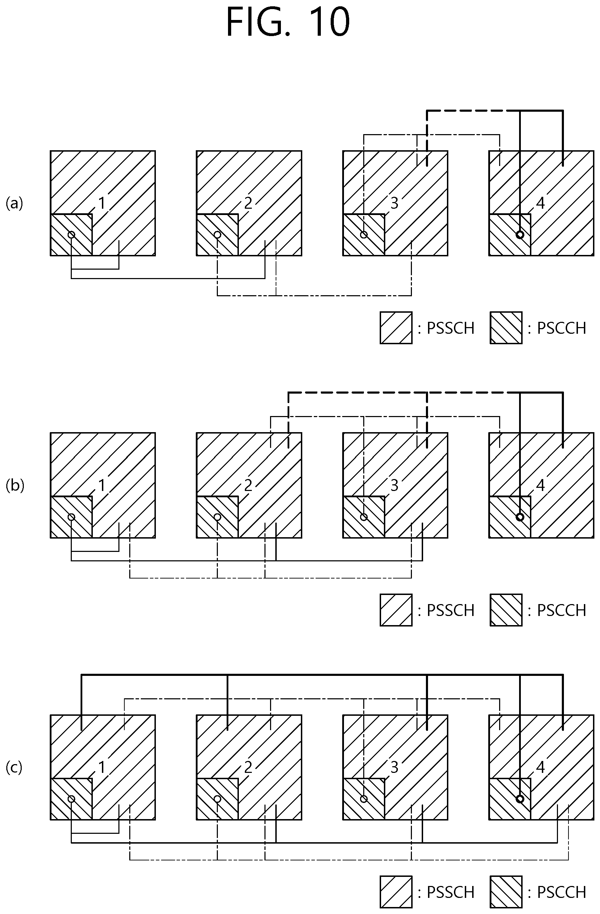

FIG. 10 shows a method in which a UE that has reserved transmission resource(s) informs another UE of the transmission resource(s), based on an embodiment of the present disclosure. The embodiment of FIG. 10 may be combined with various embodiments of the present disclosure.

Specifically, for example, (a) of FIG. 10 shows a method for performing by a transmitting UE chain-based resource reservation by transmitting/signaling location information of (maximum) 2 transmission resources to receiving UE(s) through one SCI, in the case of a value of K = 4. For example, (b) of FIG. 10 shows a method for performing by a transmitting UE chain-based resource reservation by transmitting/signaling location information of (maximum) 3 transmission resources to receiving UE(s) through one SCI, in the case of a value of K = 4. For example, referring to (a) and (b) of FIG. 10, the transmitting UE may transmit/signal only location information of the fourth transmission-related resource to the receiving UE(s) through the fourth (or last) transmission-related PSCCH. For example, referring to (a) of FIG. 10, the transmitting UE may transmit/signal to the receiving UE(s) not only location information of the fourth transmission-related resource but also location information of the third transmission-related resource additionally through the fourth (or last) transmission-related PSCCH. For example, referring to (b) of FIG. 10, the transmitting UE may transmit/signal to the receiving UE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 10, if the transmitting UE may transmit/signal to the receiving UE(s) only location information of the fourth transmission-related resource through the fourth (or last) transmission-related PSCCH, the transmitting UE may set or designate a field/bit of location information of unused or remaining transmission resource(s) to a pre-configured value (e.g., 0). For example, in (a) and (b) of FIG. 10, if the transmitting UE may transmit/signal to the receiving UE(s) only location information of the fourth transmission-related resource through the fourth (or last) transmission-related PSCCH, the transmitting UE may be set or designate a field/bit of location information of unused or remaining transmission resource(s) to a pre-configured status/bit value indicating/representing the last transmission (among 4 transmissions).

Meanwhile, for example, the transmitting UE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting UE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 10 shows a method for performing by the transmitting UE block-based resource reservation, by signaling location information of 4 transmission resources to receiving UE(s) through one SCI, in the case of a value of K = 4.

According to one embodiment of the present disclosure, the applying of some or all of the following rules may be configured for coexistence (on the same channel) between LTE SLs and NR SLs. For example, any (some or all) of the following rules may be (limitedly) applied when the SCS (and/or CP type (e.g., normal CP, extended CP)) is configured differently (or identically) between the LTE SL and the NR SL (and/or when the LTE SL and the NR SL coexist within the same channel (and/or carrier and/or resource pool)).

For example, when configuring LTE SL and/or NR SL related resource pools, an SL SSB resource of different SL types (e.g., LTE SL, NR SL) may not be included, and/or an LTE SL related resource pool may not include an NR SL PSFCH resource.

For example, to alleviate degradation of synchronization detection performance due to (partial) overlapping of PSSCH (and/or PSCCH and/or PSFCH) on SL SSBs of different SL types, PSSCH (and/or PSCCH and/or PSFCH) resource selection and/or transmission may be performed (preferentially or exclusively) in a resource area that does not (as much as possible) overlap with SL PSS/SSS symbols of different SL types. For example, if the SCS of the NR SL is configured to be 30 kHz, the resources on the odd-numbered NR slots may be used (preferentially or exclusively) for NR SL resource selection and/or transmission. For example, the SCS of the LTE SL may be fixed at 15 kHz. For example, the odd-numbered NR slot may be interpreted as a slot located later within a 1 ms subframe.

For example, NR SL communication based on LTE SL SSB (and/or LTE SL synchronization reference) may be allowed (limitedly) only when the SCS of the NR SL is configured to 15 kHz (and/or below a pre-configured threshold value). This may be because, for example, the performance degradation of the NR SL due to LTE SL SSB (and/or LTE SL synchronization reference) related synchronization error may be relatively increased if the SCS of the NR SL is configured to be greater than 15 kHz.

For example, from the perspective of a single UE, it may be difficult (due to implementation limitation) for reception operations and transmit operations to be performed simultaneously between an LTE SL module (or device) and an NR SL module (or device). In consideration of this, for example, a time domain (and/or ratio) may be separately configured in which reception operations (e.g., for sensing purposes) (and/or transmission operations) of a particular SL type (e.g., LTE SL) are (preferentially or limitedly) performed.

And/or, for example, it may be configured such that reception operations (and/or transmission operations) on resources related to channels/signals of a pre-configured specific SL type (e.g., LTE SL SSB) (and/or SL channels/signals of relatively high (and/or higher than a pre-configured threshold level) priority) are prioritized over transmission operations (and/or reception operations) of other SL types (e.g., NR SL).

For example, in a resource region where reception actions of a specific SL type are prioritized, resource selection and/or transmission of other SL types may be not allowed and/or performed at a lower priority.

For example, according to the capability related to the minimum time required for information exchange (MIN_REQTIME) between the LTE SL module (or device) and the NR SL module (or device), what is to be applied may be determined among the dynamic sharing operation or the (semi-)static sharing operation between the LTE SL and the NR SL on the same resource pool (and/or channel and/or carrier). For example, the application of dynamic sharing operation may be allowed only if the MIN_REQTIME value is shorter than a pre-configured threshold criterion.

For example, according to the number/ratio (and/or congestion level) of LTE UEs in a resource pool (and/or channel and/or carrier) (where LTE SLs and NR SLs coexist), the corresponding threshold criteria may be configured differently (and/or the application/allowance of dynamic sharing operation (or semi-static sharing operation) may be configured differently).

For example, an operation of an NR SL coexisting with an LTE SL on the same resource pool (and/or channel and/or carrier) may be allowed only if the NR SL operates based on a pre-configured type of synchronization reference (e.g., GNSS) (and/or if the (synchronization) timing difference between the LTE SL and the NR SL is less than a pre-configured threshold (e.g., CP length)). For example, when NR SL and LTE SL co-exist on the same resource pool (and/or channel and/or carrier), the NR SL operation may be performed according to the (synchronization) timing related to the LTE SL.

According to one embodiment of the present disclosure, for coexistence between LTE SL and NR SL (on the same channel), an NR SL resource pool with PSFCH resources may be configured to operate/use according to (some or all of) the rules below. Here, for example, for ease of explanation, the PSFCH resource period configured based on the existing rel-16/17 standard and the minimum time gap between the PSFCH linked with PSSCH are named "ORI_PF_PERIOD" and "ORI_MIN_GAP", respectively.

For example, for an NR SL resource pool that (partially or fully) overlaps with an LTE SL resource pool, PSFCH resources of a new period (NEW_PF_PERIOD), consisting of a (partial) subset of PSFCH resources based on ORI_PF_PERIOD, may be configured. Here, for example, a NEW_PF_PERIOD value may be configured to a value greater than ORI_PF_PERIOD (e.g., in the form of a multiple of the ORI_PF_PERIOD value).

For example, a UE may be configured to perform transmission resource selection/reservation (related to packets requiring SL HARQ feedback) only for PSSCH resources linked to NEW_PF_PERIOD based PSFCH resources. Here, for example, the PSSCH resources linked to the NEW_PF_PERIOD based PSFCH resources may be derived/determined based on ORI_MIN_GAP (and/or a parameter related to the minimum time gap between the newly configured PSSCH and the linked PSFCH (NEW_MIN_GAP)).

For example, upon selecting/reserving transmission resources related to packets that do not require SL HARQ feedback, the minimum time gap (MINGAP_ADJ_RSC) between two consecutive transmissions (e.g., initial transmission and retransmission, retransmission and retransmission, etc.) may be determined using the PSFCH resource based on ORI_PF_PERIOD (and/or NEW_PF_PERIOD and/or ORI_MIN_GAP and/or NEW_MIN_GAP).

For example, if the (remaining) packet delay budget (PDB) amount of the packets to be transmitted (requiring SL HARQ feedback) is less than a pre-configured threshold level (and/or the priority (and/or reliability requirement) is higher than a pre-configured threshold level), the UE may (exceptionally) be allowed to select/reserve transmission resources considering ORI_PF_PERIOD (and/or ORI_MIN_GAP) based PSFCH resources. Here, for example, if these conditions are not satisfied, the transmission resource selection/reservation considering the NEW_PF_PERIOD (and/or NEW_MIN_GAP and/or ORI_MIN_GAP) based PSFCH resources (and/or only the PSSCH resources linked to the NEW_PF_PERIOD (and/or NEW_MIN_GAP and/or ORI_MIN_GAP) based PSFCH resources) may be performed.

For example, an ORI_PF_PERIOD (and/or ORI_MIN_GAP) based PSFCH resource may be opportunistically utilized only when it does not overlap with LTE SL transmissions (of other UEs or their own), while NEW_PF_PERIOD (and/or NEW_MIN_GAP and/or ORI_MIN_GAP) based PSFCH resource may be configured to be available regardless.

For example, if a NEW_PF_PERIOD (and/or NEW_MIN_GAP and/or ORI_MIN_GAP) based PSFCH resource overlaps with an LTE SL transmission (of another UE or its own), an ORI_PF_PERIOD (and/or ORI_MIN_GAP) based PSFCH resource and/or transmission resource selection/reservation considering this may be (exceptionally) allowed.

For example, when selecting/reserving transmission resources (related to packets requiring SL HARQ feedback), the UE may ensure that the PSFCH resource time points linked to a plurality of PSSCH resource time points overlap as much as possible. For example, a UE may preferentially utilize PSSCH resources linked to PSFCH resources at the same time point (related to (one) TB) for transmission resource selection/reservation. Here, for example, such a rule may be applied (limitedly) only when the packet related (remaining) PDB amount is greater than a pre-configured threshold level (and/or the priority (and/or reliability requirement) is lower than a pre-configured threshold level).

For example, an NR SL module (or, device) may receive from an LTE SL module (or, device) LTE SL transmission resource information (of other UE or its own) (obtained based on LTE sensing operation), and the PHY layer of the NR SL module (or, device) may exclude PSSCH resources (and/or PSSCH resources) linked to PSFCH resources that overlap with LTE SL transmission resources from available candidate resource set, and may report it to the MAC layer (and/or report PSFCH resource information overlapping with LTE SL transmission resources (along with it)).

Alternatively, for example, a MAC layer of an NR SL module (or device) may perform resource selection considering only the remainder after excluding PSSCH resources (and/or PSSCH resources that overlap with LTE SL transmission resources) linked to PSFCH resources (and/or considering only PSFCH resources that do not overlap with LTE SL transport resources) that overlap with LTE SL transmission resources from the set of selectable candidate resources reported by the PHY layer when selecting/reserving transmission resources. For example, the PHY layer may provide the MAC layer with information related to the remainder after excluding PSSCH resources (and/or PSSCH resources that overlap with LTE SL transmission resources) that are linked to PSFCH resources that overlap with LTE SL transmission resources.

For example, on a PSFCH resource in the NR SL resource pool, when performing a PSFCH transmission (with a priority higher than or equal to a pre-configured threshold level) based on a NACK only feedback scheme, it may be configured to (exceptionally) not omit it even if it overlaps with an LTE SL transmission resource (of another UE) (with a measurement value (e.g., PSSCH/PSCHH DMRS RSRP) lower than or equal to the pre-configured threshold). For example, the above NACK only feedback scheme may be a scheme in which the receiving UE only feedbacks NACK information to the transmitting UE only if it fails to decode PSSCH.

For example, when an NR SL module (or device) delivers to an LTE SL module (or device) a set of selectable (or non-selectable) candidate resources (e.g., S_B) derived based on LTE SL sensing, a (virtual) parameter for the selection window size/position information (and/or (remaining) PDB information (and/or priority information) related to the transmission packet and/or number of sub-channels related to the transmission (and/or (retransmission) number information)) used for LTE SL sensing (related to deriving such candidate resource set) may be configured (specifically to a resource pool (and/or service and/or priority and/or QoS requirements)).

For example, if the ratio (and/or number) of selectable candidate resources among the total resources within the selection window is less than a pre-configured threshold, after the NR SL module (or device) excluding candidate resources that overlap with the LTE SL transmission resources that has been received from the LTE SL module (or device), the UE may not apply the exclusion operation of candidate resources that overlap with the LTE SL transmission resources (and/or NR SL transmission resources).

For example, after the NR SL module (or device) excludes candidate resources that overlap with the LTE SL transmission resources received from the LTE SL module (or device), if the ratio (and/or number) of selectable candidate resources among the total resources within the selection window is less than a pre-configured threshold, the ratio greater than or equal to the threshold value may be maintained by not excluding (e.g., restoring) some of the candidate resources that overlap with the LTE SL transmission resources (and/or NR SL transmission resources). For example, the ratio above or equal to the threshold value may be maintained by preferentially restoring candidate resources with relatively low interference (and/or lower than a pre-configured threshold value) of LTE SL transmissions (and/or NR SL transmissions).

And/or, for example, if the required (minimum and/or maximum and/or pre-configured) number of (NR) packet transmissions cannot be satisfied, a UE may omit the packet transmission or may not apply the exclusion operation for candidate resources that overlap with the LTE SL transmission resources (and/or NR SL transmission resources) (received from the LTE SL module (or, device)).

And/or, e.g., if the required (minimum and/or maximum and/or pre-configured) number of (NR) packet transmissions cannot be satisfied, the ratio greater than or equal to the threshold value may be maintained by not excluding (e.g., restoring) some of the candidate resources that overlap with the LTE SL transmission resources (and/or NR SL transmission resources). For example, the ratio greater than or equal to the threshold value may be maintained by preferentially restoring candidate resources with relatively low interference from LTE SL transmissions (and/or NR SL transmissions) (and/or lower than a pre-configured threshold value).

And/or, for example, after the intersection between the candidate resources generated by an NR module (or, device) (based on NR SL sensing) and the candidate resources generated by an LTE module (or, device) (based on LTE sensing) is derived by the NR module (or, device), if the number (and/or ratio) of candidate resources belonging to that intersection (within the selection window) is less than a pre-configured threshold value (and/or if the required (minimum and/or maximum and/or pre-configured) number of (NR) packet transmissions cannot be satisfied), the UE may omit the packet transmission or may not apply the exclusion operation for candidate resources that overlap with the LTE SL transmission resources (and/or NR SL transmission resources) (received from the LTE SL module (or, device)).

And/or, for example, after the intersection between the candidate resources generated by the NR module (or, device) (based on NR SL sensing) and the candidate resources generated by the LTE module (or, device) (based on LTE sensing) is derived by the NR module (or, device), if the number (and/or ratio) of candidate resources belonging to that intersection (within the selection window) is less than a pre-configured threshold value (and/or if the (NR) packet transmission cannot satisfy the (minimum and/or maximum and/or pre-configured) number of times required for (NR) packet transmission), a ratio greater than or equal to the threshold value may be maintained by not excluding (e.g., restoring) some of the candidate resources that overlap with the LTE SL transmission resources (and/or NR SL transmission resources). For example, the ratio greater than or equal to the threshold value may be maintained by preferentially restoring candidate resources with relatively low interference from LTE SL transmissions (and/or NR SL transmissions) (and/or lower than a pre-configured threshold value).

For example, when an NR SL module (or device) receives the (LTE) SL RSSI measurement information from an LTE SL module (or device), the NR SL module (or device) may preferentially perform the exclusion operation of (overlapping) candidate resources based on the (LTE) SL RSRP measurement value (and/or priority) provided by the LTE SL module (or device) (related to the other UE's LTE SL transmission resource and/or its own LTE SL transmission resource), and then if the ratio of the remaining selectable candidate resources among the total resources within the selection window is greater than a pre-configured threshold value, the candidate resources with lower (LTE) SL RSSI values may be preferentially included in the final set of candidate resources reported to the MAC layer (until the ratio above or equal to the threshold value is satisfied).

For example, when an NR SL module (or, device) (or LTE SL module (or, device)) performs a determining/excluding operation for selectable candidate resources (for a transmission of an NR (and/or LTE) SL packet transmission) using LTE (and/or NR) SL priority information related to LTE (and/or NR) SL transmission resource of the (other) UE (and/or its own LTE (and/or NR) SL transmission resource) provided by the LTE SL module (or, device) (or, NR SL module (or, device)) (and/or (LTE and/or NR) SL QOS information) (and/or (LTE and/or NR) SL RSRP measurement value (threshold value) information and/or (LTE and/or NR) SL RSSI measurement (threshold value) information and/or (LTE and/or NR) resource reservation period information and/or subchannel size), etc., NR (and/or LTE) SL priority information (and/or (NR and/or LTE) SL QOS information) (and/or (NR and/or LTE) SL RSRP measurement value (threshold) information and/or (NR and/or LTE) SL RSSI measurement value (threshold) information and/or (NR and/or LTE) resource reservation period information and/or subchannel size) mapped with LTE (and/or NR) SL priority information (and/or (LTE and/or NR) SL QOS information) (and/or (LTE and/or NR) SL RSRP measurement value (threshold) information and/or (LTE and/or NR) SL RSSI measurement value (threshold) information and/or (LTE and/or NR) resource reservation period information and/or subchannel size) used in this procedure may be pre-configured, or an LTE SL module (or, device) (and/or an NR SL module (or, device)) may provide while replacing it to (not delivering LTE (and/or NR) SL priority information (and/or (LTE and/or NR) SL QOS information) (and/or (LTE and/or NR) SL RSRP measurement value (threshold) information and/or (LTE and/or NR) SL RSSI measurement value (threshold) information and/or (LTE and/or NR) resource reservation period information and/or subchannel size) as it is) (that is maximally matched) NR (and/or LTE) SL priority information (and/or (NR and/or LTE) SL QOS information) (and/or (NR and/or LTE) SL RSRP measurement value (threshold) information and/or (NR and/or LTE) SL RSSI measurement value (threshold) information and/or (NR and/or LTE) resource reservation period information and/or subchannel size).

For example, an NR SL module (or device) may generate/determine (Option A) a (final) set of selectable candidate resources (reported to the MAC layer) by JOINTLY reflecting information related to other UEs' LTE SL transmission resources (and/or its own LTE SL transmission resources) received from an LTE SL module (or device) (obtained based on SL sensing) into an NR procedure-based candidate resource exclusion (and/or selection) procedure (performed at the NR PHY layer).

Alternatively, for example, an NR SL module (or, device) may (preferentially) generate a set of selectable candidate resources based on the NR procedure, and then consider/determine (Option B) the remaining resources as the (final) selectable candidate set (reported to the MAC layer) after excluding resources related to other UEs' LTE SL transmissions (and/or its own LTE SL transmissions) based on information delivered from the LTE SL module (or, device) from this set.

For example, the information related to the other UE's LTE SL transmission resource (and/or its own LTE SL transmission resource) may include (LTE) SL priority information (and/or (LTE) SL QOS information) (and/or (LTE) SL RSRP measurement value (threshold) information and/or (LTE) SL RSSI measurement value (threshold) information and/or (LTE) resource reservation period information and/or subchannel size), and the like.

Here, for example, an NR SL module (or, device) may configure/determine a set of selectable candidate resources of a pre-configured ratio that is reported to the MAC layer targeting only those candidate resources that remain after excluding resources related to other UEs' LTE SL transmissions (and/or its own LTE SL transmissions), based on information delivered from an LTE SL module (or, device), among the total candidate resources within the selection window (related to NR SL packet transmissions).

Further, for example, it may be configured such that an NR SL module (or device) applies a pre-configured different (or independent) (SL) RSRP threshold value (differently from case of determining whether to exclude a candidate resource that overlaps with another UE's NR SL transmission resource (case 2)), when determining whether to exclude a candidate resource that overlaps with another UE's LTE SL transmission resource (and/or its own LTE SL transmission resource), based on information received from the LTE SL module (or device). For example, the (SL) RSRP threshold value in case 1 may be configured to be relatively low, compared to case 2. For example, the (SL) RSRP threshold in case 1 may be configured to be relatively low compared to case 2, even if the priority related to LTE SL transmissions (of other UEs) in case 1 and the priority related to NR SL transmissions ( of other UEs) in case 2 are the same (to provide maximum protection for LTE SL transmissions).

For example, in case 1 above, instead of a pre-configured different (or independent) (SL) RSRP threshold, a ratio value and/or a minimum length of a selection window (e.g., a minimum T2 value) of selectable candidate resources that are reported to the MAC layer among the total candidate resources (within the selection window) may be applied.

According to one embodiment of the present disclosure, when NR SL and LTE SL coexist on the same resource pool (when the SCS value related to NR SL is configured differently (or the same) as that of LTE SL (e.g., 30 kHz)), a PSCCH/PSSCH transmission on the first NR SL slot (and/or the remaining NR SL slots) belonging to an LTE SL subframe (e.g., 1 ms) may be allowed only if the power value of the PSCCH/PSSCH transmission on the first NR SL slot (and/or the remaining NR SL slots), compared to the (sum of) the power values of the PSFCH transmission(s) on the (same) LTE SL subframe, falls within a pre-configured certain range, and/or the PSCCH/PSSCH transmit power value on the first NR SL slot (and/or the remaining NR SL slots) belonging to the LTE SL subframe, compared to the (sum of) the PSFCH transmit power value on the (same) LTE SL subframe, may be limited to fall within a pre-configured certain range.

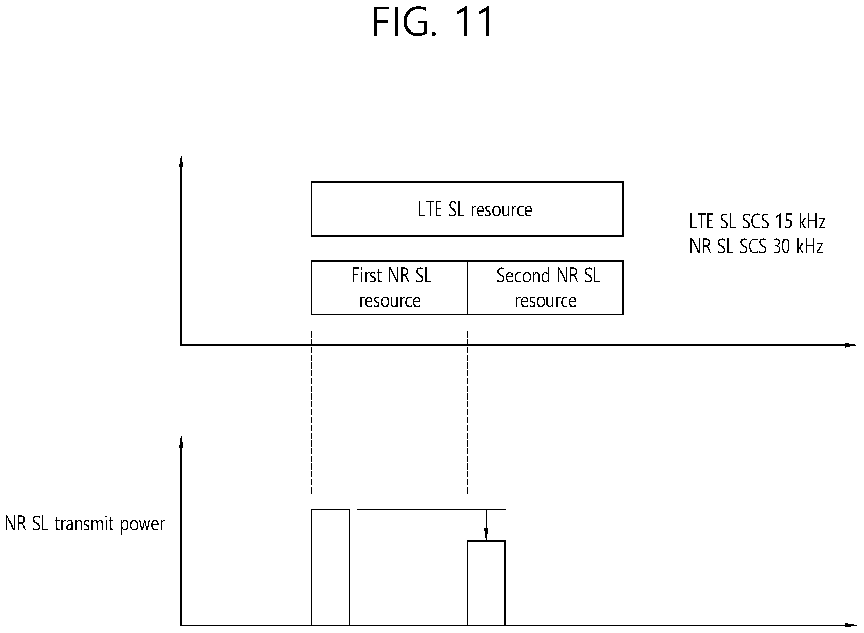

FIG. 11 shows NR SL resources overlapping an LTE SL resource and the related NR SL transmit power, according to one embodiment of the present disclosure. The embodiment of FIG. 10 may be combined with various embodiments of the present disclosure.

Referring to FIG. 11, an overlap in the time domain of an LTE SL resource, a first NR SL resource, and a second NR SL resource is shown, i.e., an LTE SL resource overlaps with a first NR SL resource and a second NR SL resource. A case like the one shown in FIG. 11 may occur because the SCS is limited to 15 kHz in the LTE SL, while the SCS may be 30 kHz in the NR SL.

Here, if the transmit power related to a second NR SL resource becomes greater than the transmit power related to a first NR SL resource, AGC saturation may occur in the transmission on the LTE SL resource because the AGC operation of the transmission on an LTE SL resource has already been completed when the transmission based on the second NR SL resource is performed.

Therefore, for NR SL transmission resources, when selecting a transmission resource to be FDMed with an LTE SL resource, a later transmission resource that is FDMed with an LTE SL resource may be selected only if the transmit power related to the transmission for resource selection for the later resource is less than or equal to the transmit power related to the earlier transmission resource.

For example, in FIG. 11, the boundaries of the LTE SL resource, the first NR SL resource, and the second NR SL resource are shown to be aligned, but the features of the present embodiment may be applied even if only some of them are FDMed.

According to one embodiment of the present disclosure, when an NR SL and an LTE SL coexist on the same resource pool, only the time resource region overlaps between the NR SL transmission (e.g., PSFCH) and the LTE SL transmission (e.g., FDM) (and/or both the time and frequency resource regions overlap), a UE performing NR SL communication may i) omit the NR SL transmission, and/or ii) omit the NR SL transmission if the received power value (e.g., RSRP measurement value) related to the LTE SL transmission is higher (or lower) than a pre-configured threshold value, and/or iii) exclude the candidate transmission resource related to the NR SL that is FDMed with the LTE SL transmission from the resource selection related to the NR SL, and/or iv) exclude the candidate transmission resource related to the NR SL that is FDMed with the LTE SL transmission from the resource selection related to the NR SL if the received power value (e.g., RSRP measurement value) related to the LTE SL transmission is higher (or lower) than a pre-configured threshold value, and/or the NR SL transmit power value is higher (or lower) than the pre-configured threshold value.

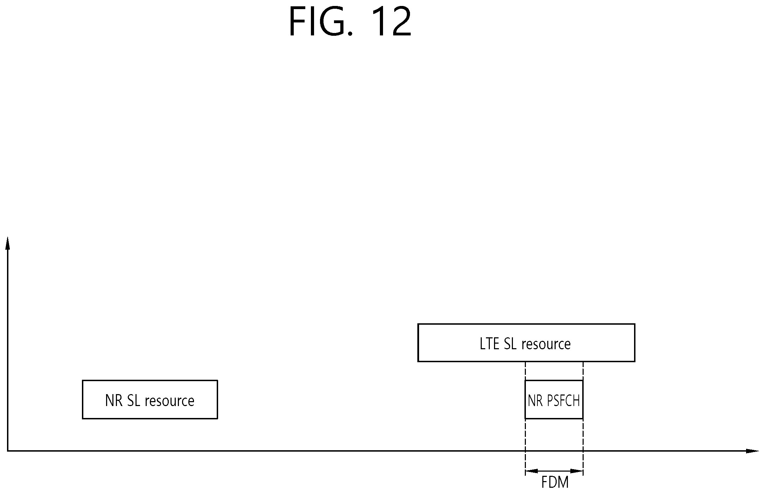

FIG. 12 shows an NR PSFCH resource overlapping with an LTE SL resource, according to one embodiment of the present disclosure. The embodiment of FIG. 11 may be combined with various embodiments of the present disclosure.

Referring to FIG. 12, an NR SL resource, an LTE SL resource, and an NR PSFCH resource related to the NR SL resource are shown. For example, the resources may be included in the same resource pool. (Alternatively, for example, the resources may not be included in the same resource pool.) Here, where HARQ feedback is transmitted through an NR PSFCH, since the NR PSFCH resource is related to a plurality of PSSCH resources, a plurality of HARQ feedbacks related to transmissions performed based on the plurality of PSSCH resources related to the NR PSFCH resource may be transmitted by a plurality of UEs on the NR PSFCH resource. In this case, AGC saturation may occur in the transmission based on the LTE SL resource where the AGC operation was performed at a prior time point to the NR PSFCH resource. Therefore, it may be necessary to avoid the situation where the NR PSFCH resource and the LTE SL resource overlap, as shown in FIG. 12.

Therefore, for example, a UE performing NR SL communication may, when selecting a specific resource for a PSSCH transmission as described above, if the related PSFCH resource is expected to overlap with an LTE SL resource, i) not perform a transmission based on the specific resource, or ii) exclude the specific resource from candidate resources in the transmission resource selection procedure.

Alternatively, for example, a UE performing the NR SL communication may perform operations i) and ii) above only when the RSRP value related to the LTE SL resource is greater than or equal to a specific value, in order to prevent the selection width of the NR SL resource from being excessively reduced.

According to one embodiment of the present disclosure, when NR SL and LTE SL coexist on the same resource pool (or when they exist in different resource pools), if an NR SL transmission (e.g., PSFCH) has a higher priority than a pre-configured threshold level, it may be configured such that the transmission is performed even if it overlaps with an LTE SL transmission (only in the time resource region and/or both in the time/frequency resource region).

And/or, for example, when NR SL and LTE SL coexist on the same resource pool, if an NR SL transmission (e.g., PSFCH) has a priority higher than a pre-configured threshold level, even if it overlaps with an LTE SL transmission (only in the time resource region and/or both in the time/frequency resource region), if the priority of the NR SL transmission has higher priority (and/or a priority within a pre-configured threshold range) than a pre-configured offset, compared to that of the LTE SL transmission that overlaps with it (only in the time resource region and/or both in the time/frequency resource region), its transmission may be configured to be performed.

Here, for example, if a plurality of PSFCH transmissions are to be performed (simultaneously), whether the conditions described above are satisfied may be determined using the highest priority related to the PSFCH transmissions, and if the conditions are satisfied, all of the plurality of PSFCH transmissions may be configured to be performed, i.e., for example, the PSFCH transmission(s) that satisfy the conditions described above may be performed together with the transmission(s) that do not.

And/or, for example, whether the conditions described above are satisfied is determined on a per-PSFCH basis, but only the PSFCH transmission(s) that satisfy the conditions may be configured to be performed. And/or, for example, only the PSFCH transmission with the highest priority among the PSFCH transmission(s) that satisfy the conditions may be configured to be performed. And/or, for example, only a pre-configured number of PSFCH transmissions in descending order of priority among the PSFCH transmission(s) that satisfy the conditions may be configured to be performed.

According to one embodiment of the present disclosure, when NR SL and LTE SL coexist on the same resource pool, it may be expected (by a UE) that the start and/or end time points of NR SL resources (e.g., slots) are configured (by the network) to be the same as those of LTE SL (e.g., subframes) (even if the same SCS (e.g., 15 kHz) is configured).

According to one embodiment of the present disclosure, an inter-UE coordination operation may be configured to be performed between UEs according to (some or all of) the rules below.

For example, if a UE-B is performing a TB transmission with a higher (or lower) priority than the one that matches the pre-configured pre-emption application related threshold level, UE-A may not transmit a conflict indicator (via a PSFCH resource).

According to one embodiment of the present disclosure, LTE SL and NR SL may be configured to operate (coexist) within the same resource pool (and/or channel), according to (some or all of) the rules below.

For example, RAN1 may be configured to support only 15 kHz and 30 kHz SCS for dynamic resource pool sharing. The existing RAN1 standard for dynamic resource pool sharing may be applied to 30 kHz support.

For example, for an NR PSCCH/PSSCH transmission in 30 kHz SCS, an NR SL UE may select at least the first slot among NR SL slots that overlap with an LTE SL subframe at the MAC layer, and then select NR SL slots that overlap at the MAC layer.

For example, the SL slot structure of the existing rel-16 may continue to be used.

For example, the start symbol of the first slot among NR SL slots that overlap may be considered to be aligned with the first symbol of the LTE SL subframe.

For example, for NR SL using 15/30 kHz SCS, an NR SL UE may avoid resource selection for a related PSCCH/PSSCH transmission if the related PSFCH transmission overlaps with an LTE SL reservation in the time domain.

[Table 20]

| Agreement |
|---|
| In NR SL resource (re)selection procedure, option 1 is adopted for how to determine candidate resource set for NR SL considering the LTE SL reserved resources by other LTE SL UE<br><br>✔ Option 1: The PHY layer of NR SL module excludes NR SL candidate resources overlapping with LTE SL reserved resources by other LTE SL UE when the SL RSRP value associated with the LTE SL reserved resources is higher than a SL RSRP threshold, where the SL RSRP threshold is derived based on LTE SL priority of other LTE SL UE and NR SL priority for NR SL transmission<br><br>  • For the list of the above initial SL RSRP threshold, down-select one of followings:<br>    - Alt 1: NR SL RSRP threshold list (pre)configured in a NR SL resource pool<br>    - Alt 2: LTE SL RSRP threshold list (pre)configured in a LTE SL resource pool<br>    - Alt 3: SL RSRP threshold list separately (pre)configured for dynamic resource pool sharing<br>    - Alt 4: SL RSRP threshold list separately (pre)configured for dynamic resource pool sharing<br>      > A different SL RSRP threshold list may be (pre)configured for selecting single slot resources in NR SL slots with NR PSFCH<br>  • For the LTE SL periodic reserved resources by other LTE SL UE,<br>    - For determining the above LTE SL reserved resources, the time-and-frequency resources of LTE SL reserved resources by other LTE SL UE are repeated Q times according to the LTE SL resource reservation period<br>      > FFS details including at least whether the formula of Q in Section 14.1.1.6 in TS 36.213 or the formula of Q in Section 8.1.4 in TS 38.214 is used<br>  • The PHY layer of NR module applies the above procedure in Step 6 in Section 8.1.4 of TS 38.214<br>    - Note: For periodic resource reservation of NR SL transmission, the PHY layer of NR SL module further excludes NR SL candidate resources of which NR SL periodic resources are overlapping with LTE SL reserved resources by other LTE SL UE when the SL RSRP value associated with the LTE SL reserved resources is higher than a SL RSRP threshold according to condition c in Step 6 in Section 8.1.4 of TS 38.214<br>      • Note: It is assumed that the information relevant to LTE SL reserved resources by other LTE SL UE used in the above procedure is shared from LTE SL module to NR SL module<br>      • FFS whether/how LTE SL RSRP is applied |

[Table 21]

| Working assumption |
|---|
| For dynamic resource pool sharing, select one option between 1-1 and 1-2, and select one option between 3-1 and 4-1-a, and define how the two selected options can be used in the operation:<br><br>✔ Option 1-1: Avoiding PSFCH transmissions overlapping with LTE SL resources reserved for LTE SL transmissions in the time domain is performed by the UE transmitting PSFCH<br>  • FFS whether/how to define condition(s) under which the UE transmitting PSFCH drops its PSFCH transmission overlapping with the LTE SL resources reserved for LTE SL transmission |

(continued)

| |
|---|
| ✓ Option 1-2: Avoiding PSFCH transmissions overlapping with LTE SL resources reserved for LTE SL transmissions in the time domain is ensured by the UE transmitting PSSCH<br>  • FFS whether/how to define condition(s) of selecting NR SL candidate resources for NR SL PSCCH/PSSCH<br>✓ Option 3-1: Additional PSFCH periodicity(ies) is introduced<br>  • Alt 3-1-a: 10 logical slots<br>  • Alt 3-1-b: 8 logical slots<br>  • Alt 3-1-c: 5 logical slots<br>  • FFS: Alignment between PSFCH periodicity and LTE logical subframes should be ensured by proper configuration<br>✓ Option 4-1: PSFCH resources and LTE SL resources are TDMed<br>  • Alt 4-1-a: PSFCH resources is confined within the guard symbol of the LTE SL subframe in the time domain<br>Note: selecting a single option is not precluded |

[Table 22]

| |
|---|
| **Agreement**<br>In NR SL resource (re)selection procedure, down-select one of followings for how to determine candidate resource set for NR SL considering the LTE SL resources selected to be used for LTE SL module's own LTE SL transmission<br>  ✓ Option 1: The PHY layer of NR SL module excludes NR SL candidate resources in a NR SL slot overlapping with LTE SL resources selected to be used for LTE SL module's own LTE SL transmission<br>    • For the LTE SL periodic resources selected to be used for LTE SL module's own LTE SL transmission,<br>      - For determining the above LTE SL selected resources, the time-and-frequency resources of LTE SL resources selected to be used for LTE SL module's own LTE SL transmission are repeated according to the LTE SL resource reservation period and LTE SL resource reselection count<br>    • The PHY layer of NR module applies the above procedure in Step 5 in Section 8.1.4 of TS 38.214<br>      - Note: For periodic resource reservation of NR SL transmission, the PHY layer of NR SL module further excludes NR SL candidate resources of which NR SL periodic resources are in a NR SL slot overlapping with LTE SL resources selected to be used for LTE SL module's own LTE SL transmission according to Step 5 in Section 8.1.4 of TS 38.214<br>      - Note: When the PHY layer of NR module cancels the above procedure according to Step 5a in Section 8.1.4 of TS 38.214, UE selects either LTE SL transmission or NR SL transmission according to Rel-16 NR SL in-device coexistence rule<br>    • FFS: whether the above procedure is applied based on the priority of LTE SL transmission and the priority of NR SL transmission<br>    • Note: It is assumed that the information relevant to LTE SL resources selected to be used for LTE SL module's own LTE SL transmission used in the above procedure is shared from LTE SL module to NR SL module<br>  ✓ Option 2: The PHY layer of NR SL module determines NR SL candidate resources regardless of whether the NR SL candidate resources are in a NR SL slot overlapping with LTE SL resources selected to be used for LTE SL module's own LTE SL transmission<br>    • UE selects either LTE SL transmission or NR SL transmission according to Rel-16 NR SL in-device coexistence rule |

[Table 23]

| |
|---|
| **Agreement**<br>Based on the agreement in RAN1#110bis-e, the value of $T_{max}$ = 4 ms. |

[Table 24]

**Agreement**

For dynamic resource pool sharing, the NR SL module uses the candidate information shared by the LTE SL module to the NR SL module, where

✓ The NR SL module excludes resources based on the shared information from its own candidate resource set when performing the resource (re)selection procedure in the PHY layer.

• FFS how to exclude resources at least based on the time and frequency locations of LTE SL transmissions that have been indicated in the shared candidate information.

• FFS how the exclusion is performed according to clause 8.1.4 of TS 38.214.

• FFS: whether/how NR SL module excludes resources not belonging to the generated LTE SL's candidate resource set SB from its own candidate resource set.

[Table 25]

**Agreement**

For dynamic resource pool sharing, the candidate information shared by the LTE SL module to the NR SL module may include one or more of the following parameters, to be down-selected:

✓ Time and frequency locations of reserved resources by other LTE UEs, determined based on decoded SCIs

✓ SL RSRP measurement results

✓ Resource reservation periods based on decoded SCI and for own LTE SL transmissions

✓ Priority based on decoded SCI and for own LTE SL transmissions

✓ Time and frequency location of resources used for own LTE SL transmissions

✓ Candidate resource set $S_A$ or $S_B$

✓ SL RSSI measurements

✓ LTE logical subframe related information

✓ Resources corresponding to half-duplex subframes which are not monitored by the LTE SL UE

[Table 26]

**Agreement**

For dynamic resource pool sharing, the NR SL module uses the information shared by the LTE SL module to the NR SL module to determine the set of resources for its own transmission.

✓ FFS: which layer carries out the resource determination: PHY layer or MAC layer.

[Table 27]

**Agreemen**

For dynamic resource pool sharing, where the NR SL module uses the candidate information shared by the LTE SL module to the NR SL module, continue studying the following alternatives:

✓ Alt 1: The LTE SL module provides the NR SL module with the candidate information (excluding at least the candidate resource sets $S_A$ or $S_B$)

• The NR SL module identifies a set of resources based on information shared by the LTE SL module.

- FFS: how to identify the set of resources

• The NR SL module excludes these identified resources from its own candidate resource set when performing the resource (re)selection procedure.

• The exclusion process is performed in the PHY layer.

• Note: implementation of Alt 1 should not have specification impact to LTE

✓ Alt 2: The LTE SL module provides the NR SL module with the candidate resource sets $S_A$ or $S_B$ shared by the LTE SL module

• The LTE PHY SL module is provided information from the higher layer to generate a candidate resource set $S_A$ or $S_B$. The resource set $S_A$ or $S_B$ is then shared to NR SL module.

• The NR SL module performs an intersection operation with the candidate resource set received from the LTE SL module and the candidate resource set generated by the NR SL module.

- FFS: how to handle the case where this results in an insufficient set of resources

(continued)

| Agreemen |
|---|
| • The intersection operation is performed in the MAC layer.<br>• FFS: How to handle NR V2X parameter settings that are not supported by LTE V2X, e.g., periodicities, sub-channel sizes, etc<br>• Note: implementation of Alt 2 should not have specification impact to LTE<br>✔ In the next meeting strive to decide between the two alternatives |

[Table 28]

| Agreement |
|---|
| For dynamic resource pool sharing, the NR SL module is expected to use the information shared by the LTE SL module to the NR SL module which is known by NR SL module at the latest T ms prior to slot n (as defined in clause 8.1.4 of TS 38.214), to determine a set of resources for its own (re)transmission.<br>    ✔ T is defined using<br>      • $T \leq T_{max}$ ms, and is based on UE implementation, according to the Rel-16 NR SL timeline for in-device coexistence.<br>      - FFS: Value of $T_{max}$<br>    ✔ FFS: any discussion on the earliest information, if needed |

[Table 29]

| Working assumption |
|---|
| Co-channel coexistence between LTE SL and NR SL is supported for device type A. Device type A contains both LTE SL and NR SL modules. For device type A, the NR SL module may use the sensing and resource reservation information shared by the LTE SL module. |

| Conclusion |
|---|
| For co-channel coexistence in Rel-18, RAN1 concludes that the TDM-based semi-static resource pool partitioning based on Rel-16/17 specifications is one possible solution to ensure co-channel coexistence between LTE-V UEs and NR-V UEs.<br>    ✔ Note: The LTE and NR resource pools do not overlap in time with each other in the TDM-based semi-static resource pool partitioning.<br>    ✔ Note 2: Rel-16 in-device coexistence framework can ensure alignment between the slot boundary of the NR SL time slot and the subframe boundary of the LTE SL subframe<br>    ✔ FFS: potential enhancements for synchronization can be further investigated |

[Table 30]

| Agreement |
|---|
| For co-channel coexistence in Rel-18, dynamic resource pool sharing is studied, with the following constraints:<br>    ✔ NR SL resource pool is configured with 15 kHz SCS.<br>      • FFS support of NR SL resource pool configured with higher SCS, including other solutions to overcome the AGC issue caused by the differing SCSs between the NR SL and LTE SL resource pools<br>    ✔ For NR PSFCH (if configured), at least the following alternatives are studied:<br>      • Alt 1: Avoid PSFCH transmission in time slots that overlap with subframes used for LTE SL transmissions.<br>      - FFS: Avoiding PSFCH transmissions can be performed by the UE transmitting PSFCH and/or the UE transmitting PSSCH.<br>      • Alt 2: NR SL UEs use a periodically repeating set of PSFCH slots.<br>      - FFS: periodicities of the set. |

[Table 31]

| Agreement |
|---|
| For co-channel coexistence in Rel-18, no changes in the LTE SL specifications are allowed. |

[Table 32]

| Agreement |
| --- |
| For co-channel coexistence in Rel-18, Rel-16/17 simulation assumptions are reused for evaluation of solutions, except for the UE dropping model.<br><br>✔ FFS: UE dropping model |

[Table 33]

| Agreement |
| --- |
| For the study of co-channel coexistence solutions in Rel-18, the combination of operational modes Mode 2 NR SL with Mode 4 LTE SL (Combination A) is considered with high priority.<br><br>✔ FFS: Whether/how to support Mode 1 NR SL + Mode 4 LTE SL (Combination B) and/or Mode 2 NR SL + Mode 3 LTE SL (Combination C). |

[Table 34]

| Agreement |
| --- |
| For evaluation of co-channel coexistence solutions in Rel-18, support the inclusion of dual module devices with NR+LTE modules using the following UE dropping models:<br><br>✔ UE Dropping Model A: The distance between 1 LTE SL module and 1 NR SL module are maintained as zero to model a co-located dual module device. The inter-device distance between any two adjacent devices in the same lane, which may be either a single module or a dual module device, is modified by doubling the time in the upper limit, resulting in max{2 meter, an exponential random variable with the average of the speed * 4sec}.<br><br>UE Dropping Model B: The distance between 1 LTE SL module and 1 NR SL module are maintained as zero to model a co-located dual module device. The inter-device distance between any two adjacent devices in the same lane, which may be either a single module or a dual module device, is maintained the same as current assumptions, i.e., max{2 meter, an exponential random variable with the average of the speed * 2sec}.<br><br>Companies should mention the UE dropping model and the distribution of each device type (single/dual module) used in their simulation assumptions. |

[Table 35]

| Agreement |
| --- |
| Feasibility of semi-static resource pool partitioning and dynamic resource sharing as possible solutions for co-channel coexistence are to be studied. |

[Table 36]

| Agreement |
| --- |
| For studying the feasibility of dynamic resource sharing as a possible solution for co-channel coexistence,<br><br>✔ For device type A, the NR SL module uses the sensing and resource reservation information shared by the LTE SL module.<br><br>    • FFS details on how the NR SL module uses this information.<br>    • FFS details on how the LTE SL module shares the information to the NR SL module, exact information shared, timeline etc.<br><br>✔ FFS: Whether/how to define other method(s) for device type A to be aware of resources being occupied by LTE SL.<br><br>✔ FFS: Whether/how device type B should be supported. |

For example, according to embodiments of the present disclosure, in case of overlap between a PSFCH of NR SL and an LTE SL resource, the RSRP threshold value to be applied to the LTE reservation when excluding the time of overlap with the PSFCH may be obtained/configured from the PHY layer. For example, the above exclusion operation may be performed at the MAC layer.

For example, when considering high SCS handling related determination, since the objective of avoiding automatic gain control (AGC) problem in LTE reception operation is the same, the PHY layer may (implementationally) inform the MAC layer of the NR SL (PSSCH) candidate resource information linked to the PSFCH that overlaps with an LTE reservation. For example, the MAC layer that receives the NR SL candidate resource information may perform an exclusion operation on the set of candidate resources to select a PSCCH/PSSCH resource related to the overlapping PSFCH.

For example, if an NR SL (PSSCH) candidate resource linked to a PSFCH that overlaps with an LTE reservation is excluded at the PHY layer, at this time, whether it exceeds the RSRP threshold value of the LTE reservation (e.g., the (existing) NR SL RSRP threshold value or the newly defined (for this purpose) RSRP threshold value or LTE SL RSRP threshold value) may need to be checked. In other words, based on the principle of high SCS handling, regardless of whether the RSRP threshold is exceeded or not, the PHY layer may exclude an NR SL (PSSCH) candidate resource linked to a PSFCH that overlaps with an LTE reservation.

According to one embodiment of the present disclosure, when a PHY layer performs an exclusion operation, even if a situation arises where a minimum value (e.g., X%) of a pre-configured (per priority) ratio of selectable NR SL (PSSCH) candidate resources is not satisfied by RSRP boosting alone, it may be necessary to report only the remaining selectable candidate resources to the MAC layer without restoring (via RSRP boosting) the NR SL (PSSCH) candidate resources linked to a PSFCH that overlaps with an LTE reservation.

Alternatively, for example, when a PHY layer performs an exclusion operation, if a situation arises where a minimum value (e.g., X%) of the pre-configured (per priority) ratio of selectable NR SL (PSSCH) candidate resources is not satisfied by RSRP boosting alone, randomly selected resources with equal probability among the NR SL (PSSCH) candidate resources linked to a PSFCH that overlaps with an LTE reservation may be restored as candidate resources until X% is satisfied.

Alternatively, for example, when a PHY layer performs an exclusion operation, if a situation arises where a minimum value (e.g., X%) of the pre-configured (per priority) ratio of selectable NR SL (PSSCH) candidate resources is not satisfied by RSRP boosting alone, resources that are selected through random selection that are below the (newly defined) RSRP threshold value (or the initial RSRP threshold (before RSRP boosting operation is applied)) may be (preferentially) restored as candidate resources (until X% are satisfied).

Alternatively, for example, when a PHY layer performs an exclusion operation, if a minimum value (e.g., X%) of the pre-configured (per priority) ratio of selectable NR SL (PSSCH) candidate resources is not satisfied by RSRP boosting alone, NR SL (PSSCH) candidate resources linked to a PSFCH that overlaps with an LTE reservation may all be restored as candidate resources.

Alternatively, for example, when a PHY layer performs an exclusion operation, if a minimum value (e.g., X%) of the pre-configured (per priority) ratio of selectable NR SL (PSSCH) candidate resources is not satisfied by RSRP boosting alone, a resource that is UE implementationally selected (until X% is satisfied) among the NR SL (PSSCH) candidate resources linked to a PSFCH that overlaps with an LTE reservation may be restored as a candidate resource.

Alternatively, for example, when a PHY layer performs an exclusion operation, if a minimum value (e.g., X%) of the pre-configured (per priority) ratio of selectable NR SL (PSSCH) candidate resources is not satisfied by RSRP boosting alone, NR SL (PSSCH) candidate resources linked to a PSFCH that overlaps with an LTE reservation (and/or overlaps with an LTE reservation with a relatively higher priority (or higher than a pre-configured threshold level)) that has a relatively low RSRP measurement value (or lower than a pre-configured threshold value) among NR SL (PSSCH) candidate resources linked to a PSFCH that overlaps with an LTE reservation may preferentially be restored as candidate resources until X% is satisfied.

According to one embodiment of the present disclosure, when excluding an NR PSSCH candidate resource linked to a PSFCH that overlaps with an LTE reservation, after an LTE SL RSRP check, an LTE SL resource with an LTE SL RSRP higher than a threshold value may be assumed to be an LTE reservation resource that overlaps.

And/or, for example, when excluding an NR PSSCH candidate resource linked to a PSFCH that overlaps with an LTE reservation, after the LTE SL RSRP check, if the LTE SL RSRP is higher than a threshold value, an LTE SL resource that is higher than an RSRP threshold value that is additionally configured once again may be assumed to be an LTE reservation resource that overlaps.

And/or, for example, when excluding NR PSSCH candidate resources linked to a PSFCH that overlaps with an LTE reservation, after the LTE SL RSRP check, an LTE SL resource whose LTE SL RSRP is higher than the newly configured RSRP threshold value may be assumed to be an LTE reservation resource that overlaps.

And/or, for example, when excluding an NR PSSCH candidate resource linked to a PSFCH that overlaps with an LTE reservation, a resource detected by LTE SCI decoding may be considered as an LTE reservation resource and the NR PSSCH candidate resource linked to a PSFCH that overlaps with it may be excluded.

For example, after an NR PSSCH candidate resource exclusion operation based on the above rules is performed, it may be configured such that the S_A of step 4 of the resource selection procedure is formed, or an NR PSSCH candidate resource exclusion operation based on the above rules may be applied after step 5 (or step 5A or step 6 or step 6A or step 6B) of the resource selection procedure.

For example, when a PHY layer performs an NR PSSCH candidate resource exclusion operation in the above form (when boosting RSRP to satisfy X% and/or when X% is not satisfied), an NR PSSCH candidate resource linked to a PSFCH that overlaps with an LTE reserved resource may not be restored.

Alternatively, for example, when a PHY layer performs an NR PSSCH candidate resource exclusion operation in the form described above (when boosting RSRP to satisfy X% and/or when X% is not satisfied), a randomly selected resource (with equal probability) among the excluded resources may be restored (until X% is satisfied).

Alternatively, for example, when a PHY layer performs an NR PSSCH candidate resource exclusion operation in the form described above (when boosting RSRP to satisfy X% and/or when X% is not satisfied), a randomly selected resource may be restored (preferentially) among the resources that are lower than a (newly defined) RSRP threshold value (or the initial RSRP threshold value (before the RSRP boosting operation is applied)) among the excluded resources (until X% is satisfied).

Alternatively, for example, when a PHY layer performs an NR PSSCH candidate resource exclusion operation in the form described above (when boosting RSRP to satisfy X% and/or when X% is not satisfied), an NR PSSCH candidate resource linked to a PSFCH that overlaps with an LTE reserved resource with a relatively lower (or lower than a pre-configured threshold) RSRP value (and/or a relatively higher (or higher than a pre-configured threshold level) priority) may be restored preferentially (until X% is satisfied).

For example, in the case of LTE NR coexistence, (when some or all of the above rules are applied) in the NR SL resource selection procedure, if an NR SL is detected only in the second slot, a resource exclusion operation may be performed in the first slot as well. For example, dynamic co-channel coexistence of an LTE SL and an NR SL may refer to coexistence of time and frequency resources shared between the NR SL and the LTE SL. For example, in the present disclosure, sharing of a resource pool may include dynamic co-channel coexistence.

For example, whether to apply the above rule (and/or a proposed scheme/rule-related parameter value of the present disclosure) may be configured/allowed (and/or appliance of the above rule may be limitedly configured/allowed) specifically for at least one among elements/parameters of a service type (and/or the (LCH or service) priority, QoS requirement (e.g., latency, reliability, the minimum communication range), a PQI parameter) (and/or (a transmission of) an LCH/MAC PDU with a HQR feedback enabled (and/or disabled), a CBR measurement value of a resource pool, an SL cast type (e.g., unicast, groupcast, broadcast), an SL groupcast HARQ feedback option (e.g., NACK only feedback, ACK/NACK feedback, TX-RX distance based NACK only feedback), SL MODE 1 CG type (e.g., SL CH type 1/2), an SL mode type (e.g., mode 1/2), a resource pool, whether it is a resource pool in which a PSFCH resource is configured, a case where a periodic resource reservation operation (and/or an aperiodic resource reservation operation) is allowed/-configured (or, not allowed/configured) on a resource pool, a case where a partial sensing operation (and/or a random resource selection operation (and/or a full sensing operation)) is allowed/configured on a resource pool (or not allowed/configured), a source (L2) ID (and/or a destination (L2) ID), a PC5 RRC connection link, an SL link, a connection status (with a base station) (e.g., RRC CONNECTED status, IDLE status, INACTIVE status), an SL HARQ process (ID), whether an SL DRX operation is performed (by a transmitting UE or a receiving UE), whether it is a power saving (transmitting or receiving) UE, a case where a PSFCH transmission and a PSFCH RX (and/or a plurality of PSFCH transmissions (exceeding the UE capability)) overlap (and/or a PSFCH transmission (and/or a PSFCH reception) is omitted) (in a specific UE's perspective), a case where a receiving UE (successfully) actually received an inter- UE physical control channel (e.g., PSCCH) (and/or a PSSCH) (re)transmission from a transmitting UE, a case where a (transmitting) UE performing a packet transmission (and/or transmission resource (re)selection) performs a power saving operation (and/or an SL DRX operation), a case where a target (receiving) UE of a transmission packet performs a power saving operation (and/or an SL DRX operation), a case where the remaining PDB value related to a transmission packet is greater than or equal to (or less than or equal to) a pre-configured threshold value, a case of an initial transmission (and/or a retransmission) (related to a TB), a case where an interlace-based (RB) structure is applied, a case where a (pre-configured) channel access type (e.g., type 1, type 2A, type 2B, type 2C, semi-static channel occupancy) is performed, a case where a transmission/reception of an (pre-configured) SL channel/signal (e.g., an SL SSB, a PSCCH, a PSSCH, a PSFCH) is performed, an RB set (where a channel access operation is performed in unlicensed band) (and/or a channel, a carrier), a channel occupancy time (e.g., COT), a TX burst, and/or a discovery burst. Also, combinations of the proposed schemes described in the present disclosure (and/or proposed rules and/or embodiments) may be applied.

In addition, the wording "configure" (or "designation") in this disclosure may be extended and interpreted as a form of a base station informing a UE through predefined (physical layer or higher layer) channel/signal (e.g., SIB, RRC, MAC CE) (and/or, a form of being provided through pre-configuration, and/or a form of a UE informing another UE through predefined (physical layer or higher layer) channel/signal (e.g., SL MAC CE, PC5 RRC)).

In addition, the wording "PSFCH" in this disclosure may be (mutually) extended and interpreted as "(NR or LTE) PSSCH (and/or (NR or LTE) PSCCH) (and/or (NR or LTE) SL SSB (and/or UL channel/signal)".

Further, the proposed methods of the present disclosure may be extended and used by being combined with each other (in new forms). Furthermore, in this disclosure, the wordings "active time" (and/or "on-duration") may be (mutually) extended and interpreted as "on-duration" (and/or "active time").

According to one embodiment of the present disclosure, the scheme for determining the size of a contention window may be a scheme where a plurality of schemes are applied in combination. For example, the method may be a scheme in which, if there are multiple SL HARQ-ACK feedback groups that are referenced, and if the result determined based on a representative HARQ-ACK value of each group is not to maintain the CWp value for all or each CAPC and/or to initialize to the initial value, the CWp value is incremented per all or each CAPC to the next allowed value.

For example, if multiple factors referenced in configuring the size of a contention window size is varied, when, as a result of the determination of each factor, incrementing the CWp value to the next allowed value and maintaining or initializing the CWp value simultaneously occur, the CWp value may be maintained and/or the CWp value may be initialized to the minimum value.

For example, if multiple factors referenced in configuring the size of a contention window size is varied, when, as a result of the determination of each factor, incrementing the CWp value to the next allowed value and maintaining or initializing the CWp value simultaneously occur, the CWp value may be incremented to the next allowed value.

According to one embodiment of the present disclosure, a PSCCH/PSSCH referenced in determining the size of a contention window may be received within a specific time interval. For example, the specific time interval may be within the earliest SL channel occupancy interval since a UE last updated its CWp.

According to one embodiment of the present disclosure, an operation in which CWp is initialized to a minimum value may be replaced by another specific value (e.g., a (pre-)configured value), and/or the specific value may be configured differently according to factors that control the size of a contention window.

In various embodiments of the present disclosure, for example, a reference interval may be i) an interval from a starting time point of channel occupancy for a COT occupied by a UE (for sidelink communication) and/or a COT occupied by a base station (for sidelink communication) to the end time point of the first slot in which an actual specific sidelink transmission is performed for all allocated resources for a sidelink transmission, or ii) to the end time point of the first transmission burst including an actual specific sidelink transmission for all allocated resources for a sidelink transmission, or iii) to an earlier time point between the end points. For example, the specific sidelink transmission may be a PSCCH/PSSCH transmission and/or a PSCCH/PSSCH with SL HARQ-ACK feedback enabled for unicast and/or groupcast. For example, the length of the reference interval may be (pre-)configured per resource pool and/or per SL priority value of a UE's SL transmission when the COT is initialized.

In various embodiments of the present disclosure, for example, different combinations of the above may be used according to whether a channel occupancy time duration (e.g., COT duration) is initialized by a UE or a base station.

In various embodiments of the present disclosure, for example, adjusting the size of a contention window for sidelink may be performed per unicast session (group) and/or per cast type and/or per transmission priority value and/or per SL transmission with SL HARQ-ACK feedback enabled/disabled and/or per SL HARQ-ACK feedback option, respectively. For example, the procedure of adjusting the size of a contention window may be performed respectively for an SL transmission from a first UE to a second UE and for an SL transmission from a third UE to a fourth UE. For example, when adjusting the size of a contention window based on a HARQ-ACK, the HARQ-ACK may be limited to be for a specific cast type and/or a specific unicast session.

In various embodiments of the present disclosure, for example, adjusting the size of a contention window for a sidelink may be performed only based on a specific cast type (e.g., unicast or groupcast) and/or a PSSCH with SL HARQ-ACK feedback enabled.

In various embodiments of the present disclosure, for example, initializing the value of CW_p to the respective minimum value may be applied by replacing it with decreasing the value of CW_p to the previous allowed value.

For example, in TYPE 1 SL channel access, the size of the contention window may be (pre-)configured per priority class and/or per SL priority and/or per resource pool. For example, in the above case, a UE may not perform any operation of separately adjusting the size of the contention window.

In various embodiments of the present disclosure, for example, in a channel sensing operation based on a channel access type, a threshold value for determining whether a channel is busy or idle may be (pre-)configured, and/or predefined per resource pool, and/or per SL BWP, and/or per RB set, and/or per carrier, and/or per SL transmission priority, and/or per representative transmit power value (range), and/or per congestion control level.

Various embodiments of the present disclosure may be applied in the form of any of the above combinations, depending, for example, on the transmission within or outside the COT. Various embodiments of the present disclosure may be applied in the form of any of the above combinations, depending, for example, on the form of the COT (e.g., whether it is semi-static or time-varying). For example, within the semi-static COT, the absence of other technologies sharing the same channel or RB set for a certain period of time, such as by a regulation, may be guaranteed. For example, within the semi-static COT, the absence of base station-to-UE and/or UE-to-base station transmission (e.g., DL and/or UL transmission) sharing the same channel or RB set for a certain period of time may be guaranteed, such as by regulation, for SL transmission. For example, within the semi-static COT, the absence of an SL transmission sharing the same channel or RB set may be guaranteed for a certain period of time, such as by regulation, for base station-to-UE and/or base station-to-UE transmissions (e.g., DL and/or UL transmissions). For example, within the semi-static COT, the absence of SL mode 2 resource (re)selection based on SL transmission sharing the same channel or RB set may be guaranteed for a certain period of time, such as by regulation.

For example, the length of the fixed-frame period (FFP) and/or the time-axis offset value for the semi-static channel occupancy time duration (e.g., COT duration) may be (pre-)configured per resource pool and/or per SL BWP and/or per carrier and/or per RB set and/or per congestion control level and/or per SL transmission priority value. For example, the length of the fixed-frame period (FFP) and/or the time axis offset value for the semi-static channel occupancy time duration (e.g., COT duration) may be configured via inter-UE PC5-RRC signaling. For example, the FFP (pre-)configured via the PC5-RRC signaling may be overwritten. For example, the FFP configured via the PC5-RRC may be limitedly used for a unicast transmission corresponding to the PC5-RRC connection. Various embodiments of the present disclosure may be applied differently in the form of combinations of the above, according to the carrier, or according to whether a guard exists between RB sets or according to regulations.

While contention window size changing for all CAPC is described in various embodiments of the present disclosure, the ideas of the present disclosure can be extended and applied in the form of contention window size changing for a specific CAPC or SL priority value.

In various embodiments of the present disclosure, for example, the above schemes may be applied differently per SL channel, with respect to the channel access type and whether/how it is indicated. In various embodiments of the present disclosure, for example, the above schemes may be applied differently according to the type of information included in an SL channel, with respect to the type of channel access and whether/how it is indicated.

For example, the proposed method may be applied to devices described below. First, a processor 202 of a receiving UE may establish at least one BWP; and, a processor 202 of a receiving UE may control a transceiver 206 of a receiving UE to receive a sidelink-related physical channel and/or a sidelink-related reference signal from a transmitting UE over at least one BWP.

For example, if the RSRP of an LTE resource reserved by another device is greater than or equal to a threshold value, an NR PSSCH resource may be selected such that the related PSFCH occasion does not overlap temporally with the LTE resource. For example, under dynamic pool sharing operation, an NR SL module (or device) may be configured to consider only LTE SL reserved resources that exceed a pre-configured LTE SL RSRP threshold value for determining (in resource selection step 5) the overlap in time domain with PSFCH transmission occasions linked to an NR SL candidate resource. Here, the overlap in time domain may include a PSFCH resource linked to an NR SL candidate resource and an LTE SL reserved resource being FDMed at the same time point, or some/all of the related frequency resource region overlapping at the same time point. For example, under dynamic pool sharing operation, if an NR SL SCS is greater than an LTE SL SCS (e.g., NR SL with 30KHZ SCS), the transmit power value on the first NR SL slot that overlaps with an LTE SL subframe may be greater than or equal to that on the second NR SL slot.

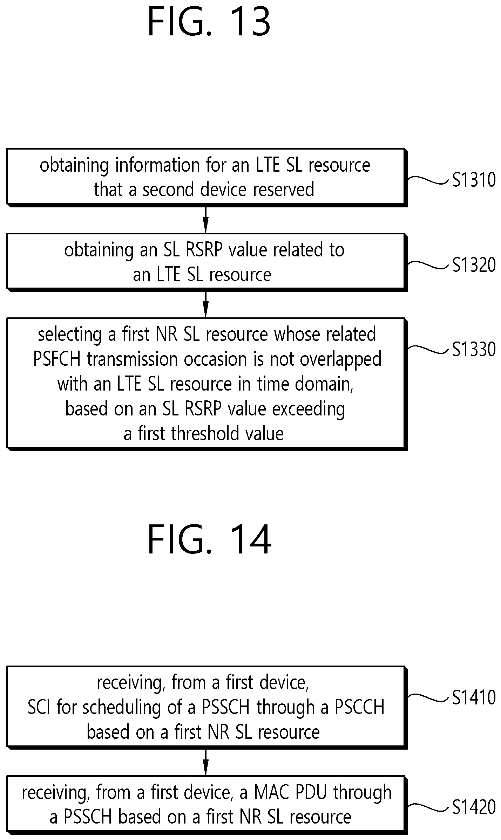

FIG. 13 shows a procedure for a first device to perform wireless communication, according to one embodiment of the present disclosure. The embodiment of FIG. 13 may be combined with various embodiments of the present disclosure.

Referring to FIG. 13, in step S1310, a first device may obtain information for a long term evolution, LTE, sidelink, SL, resource that a second device reserved. In step S1320, the first device may obtain an SL reference signal received power, RSRP, value related to the LTE SL resource. In step S1330, the first device may select a first new radio, NR, SL resource whose related physical sidelink feedback channel, PSFCH, transmission occasion is not overlapped with the LTE SL resource in time domain, based on the SL RSRP value exceeding a first threshold value.

For example, additionally, the first device may exclude a resource whose related PSFCH transmission occasion is overlapped with the LTE SL resource in time domain from a candidate resource set for selecting the first NR SL resource, based on the SL RSRP value exceeding the first threshold value.

For example, the resource whose related PSFCH transmission occasion is overlapped with the LTE SL resource in time domain may be overlapped with the LTE SL resource in time domain and frequency domain.

For example, the resource whose related PSFCH transmission occasion is overlapped with the LTE SL resource in time domain may be not overlapped with the LTE SL resource in frequency domain.

For example, additionally, the first device may restore at least one resource among resources excluded from the candidate resource set to the candidate resource set, based on a ratio of the candidate resource set to total resources within a selection window being smaller than a threshold ratio.

For example, the resource whose related PSFCH transmission occasion is overlapped with the LTE SL resource in time domain may be not included in the restored resource.

For example, the restored resource may be randomly selected among the excluded resources.

For example, the restored resource may be the resource whose related PSFCH transmission occasion is overlapped with the LTE SL resource in time domain, the SL RSRP value may be smaller than a second threshold value, and the second threshold value may be greater than the first threshold value.

For example, the restored resource may be the resource whose related PSFCH transmission occasion is overlapped with the LTE SL resource in time domain, and a priority related to a medium access control, MAC, protocol data unit, PDU, to be transmitted through the LTE SL resource may be higher than a threshold priority.

For example, the first threshold value may be pre-configured.

For example, a first transmit power related to the first NR SL resource may be greater than or equal to a second transmit power related to a second NR SL resource, based on the LTE SL resource being overlapped with the second NR SL resource after the first NR SL resource and the first NR SL resource in time domain.

For example, a start time point of the first NR SL resource may be aligned with a start time point of the LTE SL resource.

For example, a first subcarrier spacing, SCS, related to the LTE SL resource may be 15kHz, and a second SCS related to the first NR SL resource and the second NR SL resource may be 30kHz.

The embodiments described above may be applied to various devices described below. First, a processor 102 of a first device 100 may obtain information for a long term evolution, LTE, sidelink, SL, resource that a second device 200 reserved. And, the processor 102 of the first device 100 may obtain an SL reference signal received power, RSRP, value related to the LTE SL resource. And, the processor 102 of the first device 100 may select a first new radio, NR, SL resource whose related physical sidelink feedback channel, PSFCH, transmission occasion is not overlapped with the LTE SL resource in time domain, based on the SL RSRP value exceeding a first threshold value.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: obtaining information for a long term evolution, LTE, sidelink, SL, resource that a second device reserved; obtaining an SL reference signal received power, RSRP, value related to the LTE SL resource; and selecting a first new radio, NR, SL resource whose related physical sidelink feedback channel, PSFCH, transmission occasion is not overlapped with the LTE SL resource in time domain, based on the SL RSRP value exceeding a first threshold value.

For example, additionally, the operations may further comprise: excluding a resource whose related PSFCH transmission occasion is overlapped with the LTE SL resource in time domain from a candidate resource set for selecting the first NR SL resource, based on the SL RSRP value exceeding the first threshold value.

For example, the resource whose related PSFCH transmission occasion is overlapped with the LTE SL resource in time domain may be overlapped with the LTE SL resource in time domain and frequency domain.

For example, the resource whose related PSFCH transmission occasion is overlapped with the LTE SL resource in time domain may be not overlapped with the LTE SL resource in frequency domain.

For example, additionally, the operations may further comprise: restoring at least one resource among resources excluded from the candidate resource set to the candidate resource set, based on a ratio of the candidate resource set to total resources within a selection window being smaller than a threshold ratio.

For example, the resource whose related PSFCH transmission occasion is overlapped with the LTE SL resource in time domain may be not included in the restored resource.

For example, the restored resource may be randomly selected among the excluded resources.

For example, the restored resource may be the resource whose related PSFCH transmission occasion is overlapped with the LTE SL resource in time domain, the SL RSRP value may be smaller than a second threshold value, and the second threshold value may be greater than the first threshold value.

For example, the restored resource may be the resource whose related PSFCH transmission occasion is overlapped with the LTE SL resource in time domain, and a priority related to a medium access control, MAC, protocol data unit, PDU, to be transmitted through the LTE SL resource may be higher than a threshold priority.

For example, the first threshold value may be pre-configured.

For example, a first transmit power related to the first NR SL resource may be greater than or equal to a second transmit power related to a second NR SL resource, based on the LTE SL resource being overlapped with the second NR SL resource after the first NR SL resource and the first NR SL resource in time domain.

For example, a start time point of the first NR SL resource may be aligned with a start time point of the LTE SL resource.

For example, a first subcarrier spacing, SCS, related to the LTE SL resource may be 15kHz, and a second SCS related to the first NR SL resource and the second NR SL resource may be 30kHz.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: obtaining information for a long term evolution, LTE, sidelink, SL, resource that a second device reserved; obtaining an SL reference signal received power, RSRP, value related to the LTE SL resource; and selecting a first new radio, NR, SL resource whose related physical sidelink feedback channel, PSFCH, transmission occasion is not overlapped with the LTE SL resource in time domain, based on the SL RSRP value exceeding a first threshold value.

According to an embodiment of the present disclosure, a non-transitory computer-readable storage medium storing instructions may be proposed. For example, the instructions, based on being executed, may cause a first device to:

obtain information for a long term evolution, LTE, sidelink, SL, resource that a second device reserved; obtain an SL reference signal received power, RSRP, value related to the LTE SL resource; and select a first new radio, NR, SL resource whose related physical sidelink feedback channel, PSFCH, transmission occasion is not overlapped with the LTE SL resource in time domain, based on the SL RSRP value exceeding a first threshold value.

FIG. 14 shows a procedure for a second device to perform wireless communication, according to one embodiment of the present disclosure. The embodiment of FIG. 14 may be combined with various embodiments of the present disclosure.

Referring to FIG. 14, in step S1410, a second device may receive, from a first device, sidelink control information, SCI, for scheduling of a physical sidelink shared channel, PSSCH, through a physical sidelink control channel, PSCCH, based on a first new radio, NR, SL resource. In step S1420, the second device may receive, from the first device, a medium access control, MAC, protocol data unit, PDU, through the PSSCH based on the first NR SL resource. For example, a physical sidelink feedback channel, PSFCH, transmission occasion related to the first NR SL resource may be not overlapped with a long term evolution, LTE, SL resource in time domain, and the first NR SL resource may be selected based on an SL reference signal received power, RSRP, value related to the LTE SL resource exceeding a first threshold value.

For example, a resource whose related PSFCH transmission occasion is overlapped with the LTE SL resource in time domain being selected as the first NR SL resource may be not allowed, based on the SL RSRP value exceeding the first threshold value.

The embodiments described above may be applied to various devices described below. First, a processor 202 of a second device 200 may control a transceiver 206 to receive, from a first device 100, sidelink control information, SCI, for scheduling of a physical sidelink shared channel, PSSCH, through a physical sidelink control channel, PSCCH, based on a first new radio, NR, SL resource. And, the processor 202 of the second device 200 may control the transceiver 206 to receive, from the first device 100, a medium access control, MAC, protocol data unit, PDU, through the PSSCH based on the first NR SL resource. For example, a physical sidelink feedback channel, PSFCH, transmission occasion related to the first NR SL resource may be not overlapped with a long term evolution, LTE, SL resource in time domain, and the first NR SL resource may be selected based on an SL reference signal received power, RSRP, value related to the LTE SL resource exceeding a first threshold value.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, sidelink control information, SCI, for scheduling of a physical sidelink shared channel, PSSCH, through a physical sidelink control channel, PSCCH, based on a first new radio, NR, SL resource; and receiving, from the first device, a medium access control, MAC, protocol data unit, PDU, through the PSSCH based on the first NR SL resource, wherein a physical sidelink feedback channel, PSFCH, transmission occasion related to the first NR SL resource may be not overlapped with a long term evolution, LTE, SL resource in time domain, and the first NR SL resource may be selected based on an SL reference signal received power, RSRP, value related to the LTE SL resource exceeding a first threshold value.

For example, a resource whose related PSFCH transmission occasion is overlapped with the LTE SL resource in time domain being selected as the first NR SL resource may be not allowed, based on the SL RSRP value exceeding the first threshold value.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

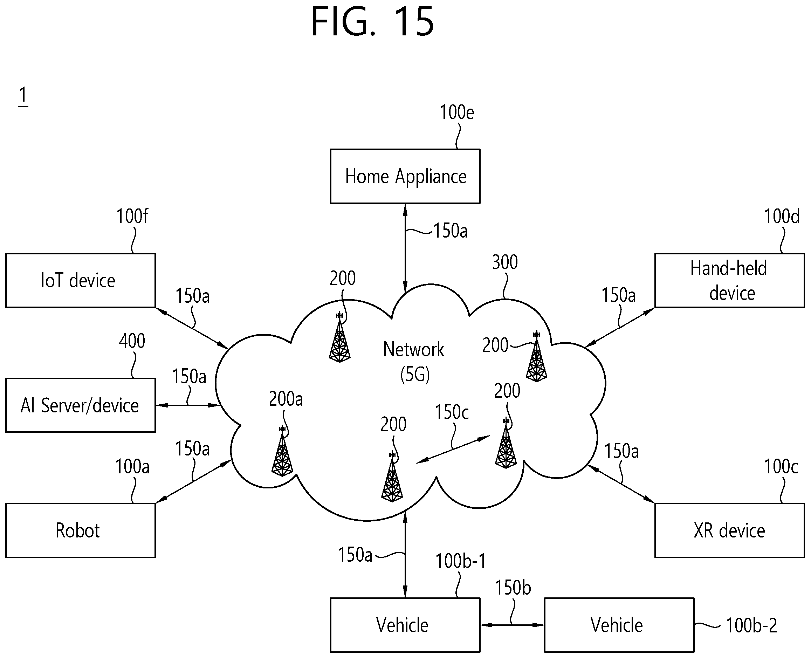

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

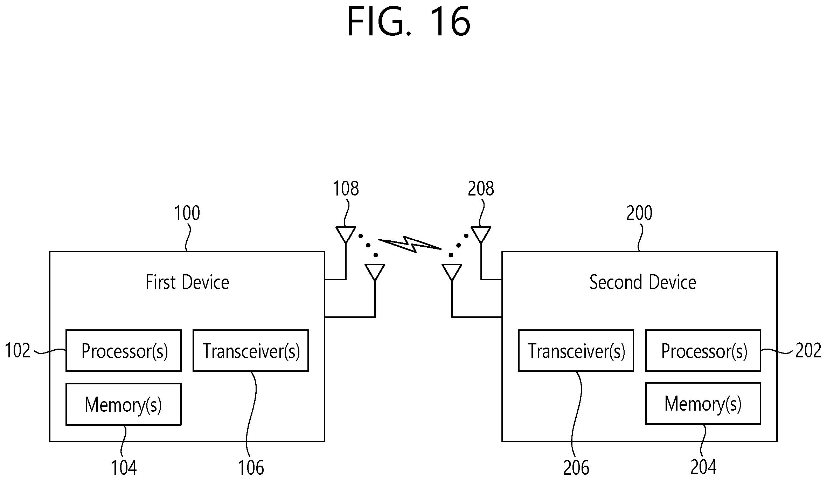

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

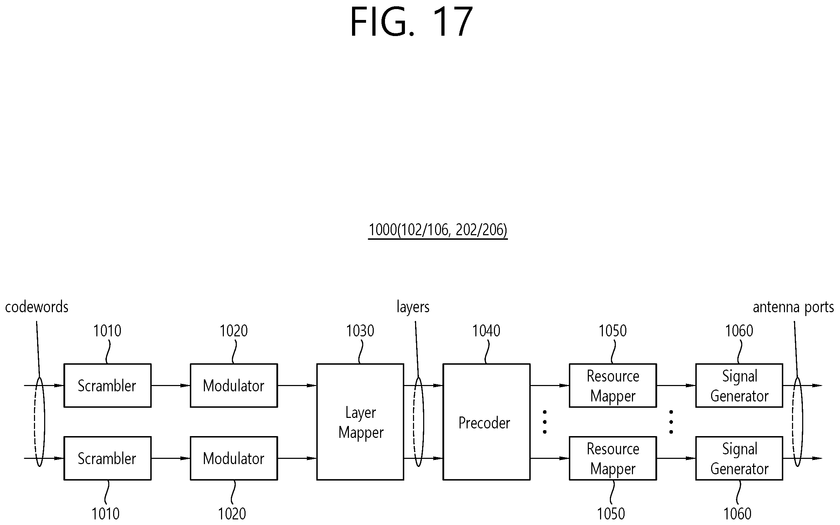

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

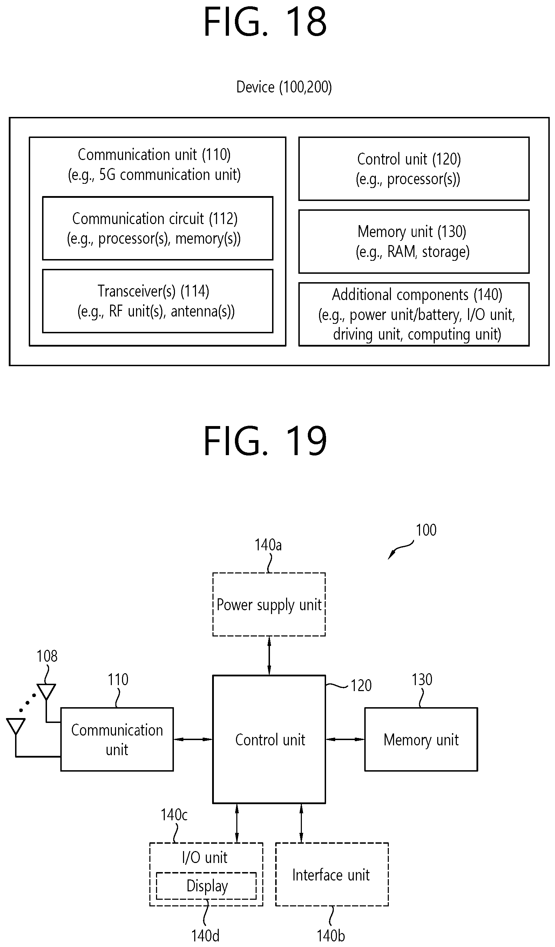

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

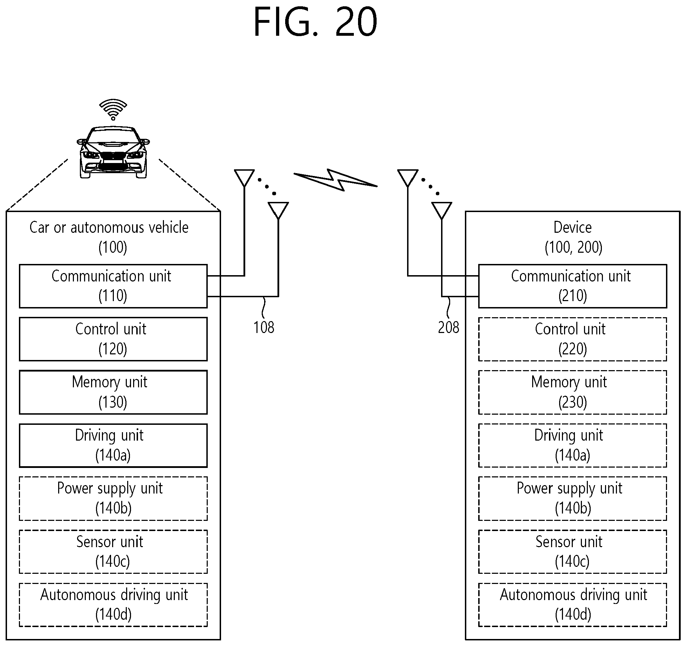

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:

    obtaining information for a long term evolution, LTE, sidelink, SL, resource that a second device reserved;
    obtaining an SL reference signal received power, RSRP, value related to the LTE SL resource; and
    selecting a first new radio, NR, SL resource whose related physical sidelink feedback channel, PSFCH, transmission occasion is not overlapped with the LTE SL resource in time domain, based on the SL RSRP value exceeding a first threshold value.

2. The method of claim 1, further comprising:
    excluding a resource whose related PSFCH transmission occasion is overlapped with the LTE SL resource in time domain from a candidate resource set for selecting the first NR SL resource, based on the SL RSRP value exceeding the first threshold value.

3. The method of claim 2, wherein the resource whose related PSFCH transmission occasion is overlapped with the LTE SL resource in time domain is overlapped with the LTE SL resource in time domain and frequency domain.

4. The method of claim 2, wherein the resource whose related PSFCH transmission occasion is overlapped with the LTE SL resource in time domain is not overlapped with the LTE SL resource in frequency domain.

5. The method of claim 2, further comprising:
restoring at least one resource among resources excluded from the candidate resource set to the candidate resource set, based on a ratio of the candidate resource set to total resources within a selection window being smaller than a threshold ratio.

6. The method of claim 5, wherein the resource whose related PSFCH transmission occasion is overlapped with the LTE SL resource in time domain is not included in the restored resource.

7. The method of claim 5, wherein the restored resource is randomly selected among the excluded resources.

8. The method of claim 5, wherein the restored resource is the resource whose related PSFCH transmission occasion is overlapped with the LTE SL resource in time domain,

wherein the SL RSRP value is smaller than a second threshold value, and
wherein the second threshold value is greater than the first threshold value.

9. The method of claim 5, wherein the restored resource is the resource whose related PSFCH transmission occasion is overlapped with the LTE SL resource in time domain, and
wherein a priority related to a medium access control, MAC, protocol data unit, PDU, to be transmitted through the LTE SL resource is higher than a threshold priority.

10. The method of claim 1, wherein the first threshold value is pre-configured.

11. The method of claim 1, wherein a first transmit power related to the first NR SL resource is greater than or equal to a second transmit power related to a second NR SL resource, based on the LTE SL resource being overlapped with the second NR SL resource after the first NR SL resource and the first NR SL resource in time domain.

12. The method of claim 11, wherein a start time point of the first NR SL resource is aligned with a start time point of the LTE SL resource.

13. The method of claim 11, wherein a first subcarrier spacing, SCS, related to the LTE SL resource is 15kHz, and wherein a second SCS related to the first NR SL resource and the second NR SL resource is 30kHz.

14. A first device for performing wireless communication, the first device comprising:

at least one transceiver;
at least one processor; and
at least one memory operably connected to the at least one processor and storing instructions that, based on being executed by the at least one processor, cause the first device to perform operations,
wherein the operations comprise:

obtaining information for a long term evolution, LTE, sidelink, SL, resource that a second device reserved;
obtaining an SL reference signal received power, RSRP, value related to the LTE SL resource; and
selecting a first new radio, NR, SL resource whose related physical sidelink feedback channel, PSFCH, transmission occasion is not overlapped with the LTE SL resource in time domain, based on the SL RSRP value exceeding a first threshold value.

15. A device adapted to control a first user equipment, UE, the device comprising:

at least one processor; and
at least one memory operably connected to the at least one processor and storing instructions that, based on being executed by the at least one processor, cause the first UE to perform operations,

wherein the operations comprise:

obtaining information for a long term evolution, LTE, sidelink, SL, resource that a second device reserved;
obtaining an SL reference signal received power, RSRP, value related to the LTE SL resource; and
selecting a first new radio, NR, SL resource whose related physical sidelink feedback channel, PSFCH, transmission occasion is not overlapped with the LTE SL resource in time domain, based on the SL RSRP value exceeding a first threshold value.

16. A non-transitory computer-readable storage medium storing instructions that, based on being executed, cause a first device to:

obtain information for a long term evolution, LTE, sidelink, SL, resource that a second device reserved;
obtain an SL reference signal received power, RSRP, value related to the LTE SL resource; and
select a first new radio, NR, SL resource whose related physical sidelink feedback channel, PSFCH, transmission occasion is not overlapped with the LTE SL resource in time domain, based on the SL RSRP value exceeding a first threshold value.

17. A method for performing, by a second device, wireless communication, the method comprising:

receiving, from a first device, sidelink control information, SCI, for scheduling of a physical sidelink shared channel, PSSCH, through a physical sidelink control channel, PSCCH, based on a first new radio, NR, SL resource; and
receiving, from the first device, a medium access control, MAC, protocol data unit, PDU, through the PSSCH based on the first NR SL resource,
wherein a physical sidelink feedback channel, PSFCH, transmission occasion related to the first NR SL resource is not overlapped with a long term evolution, LTE, SL resource in time domain, and
wherein the first NR SL resource is selected based on an SL reference signal received power, RSRP, value related to the LTE SL resource exceeding a first threshold value.

18. The method of claim 17, wherein a resource whose related PSFCH transmission occasion is overlapped with the LTE SL resource in time domain being selected as the first NR SL resource is not allowed, based on the SL RSRP value exceeding the first threshold value.

19. A second device for performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

receiving, from a first device, sidelink control information, SCI, for scheduling of a physical sidelink shared channel, PSSCH, through a physical sidelink control channel, PSCCH, based on a first new radio, NR, SL resource; and
receiving, from the first device, a medium access control, MAC, protocol data unit, PDU, through the PSSCH based on the first NR SL resource,
wherein a physical sidelink feedback channel, PSFCH, transmission occasion related to the first NR SL resource is not overlapped with a long term evolution, LTE, SL resource in time domain, and
wherein the first NR SL resource is selected based on an SL reference signal received power, RSRP, value related to the LTE SL resource exceeding a first threshold value.

20. The second device of claim 19, wherein a resource whose related PSFCH transmission occasion is overlapped with the LTE SL resource in time domain being selected as the first NR SL resource is not allowed, based on the SL RSRP value exceeding the first threshold value.

# FIG. 1

# FIG. 2

# FIG. 3

# FIG. 4

**(a)**

| UE | gNB |
|---|---|
| SDAP | SDAP |
| PDCP | PDCP |
| RLC | RLC |
| MAC | MAC |
| PHY | PHY |

**(b)**

| UE | gNB | AMF |
|---|---|---|
| NAS | | NAS |
| RRC | RRC | |
| PDCP | PDCP | |
| RLC | RLC | |
| MAC | MAC | |
| PHY | PHY | |

**(c)**

| UE A | UE B |
|---|---|
| SDAP | SDAP |
| PDCP | PDCP |
| RLC | RLC |
| MAC | MAC |
| PHY | PHY |

PC5-U

**(d)**

| UE A | UE B |
|---|---|
| RRC | RRC |
| PDCP | PDCP |
| RLC | RLC |
| MAC | MAC |
| PHY | PHY |

PC5-C

# FIG. 5

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 572 453 A1

53

# FIG. 7

PRB N3

PRB 1

PRB 0

$N_{BWP, 2}^{size}$

PRB N2

PRB 1

PRB 0

$N_{BWP, 1}^{size}$

Carrier
Bandwidth

$N_{BWP, 2}^{start}$

PRB N1

PRB 1

PRB 0

$N_{BWP, 0}^{size}$

$N_{BWP, 1}^{start}$

CRB 0

$N_{BWP, 0}^{start}$

Freq.

Time

PRB 0 (Point A) in reference resource block

# FIG. 8

(a)                    (b)

# FIG. 9

(a)          (b)          (c)

● : TX UE
⊘ : RX UE

# FIG. 10

(a)

☐ : PSSCH   ☐ : PSCCH

(b)

☐ : PSSCH   ☐ : PSCCH

(c)

☐ : PSSCH   ☐ : PSCCH

# FIG. 11

LTE SL resource

First NR SL resource | Second NR SL resource

LTE SL SCS 15 kHz
NR SL SCS 30 kHz

NR SL transmit power

# FIG. 12

NR SL resource

LTE SL resource

NR PSFCH

FDM

EP 4 572 453 A1

# FIG. 13

obtaining information for an LTE SL resource
that a second device reserved — S1310

obtaining an SL RSRP value related to
an LTE SL resource — S1320

selecting a first NR SL resource whose related
PSFCH transmission occasion is not overlapped
with an LTE SL resource in time domain,
based on an SL RSRP value exceeding
a first threshold value — S1330

# FIG. 14

receiving, from a first device,
SCI for scheduling of a PSSCH through a PSCCH
based on a first NR SL resource — S1410

receiving, from a first device, a MAC PDU through
a PSSCH based on a first NR SL resource — S1420

# FIG. 15

EP 4 572 453 A1

EP 4 572 453 A1

FIG. 16

# FIG. 17

1000(102/106, 202/206)

codewords → Scrambler (1010) → Modulator (1020) → Layer Mapper (1030) → layers → Precoder (1040) → Resource Mapper (1050) → Signal Generator (1060) → antenna ports

Scrambler (1010) → Modulator (1020) → Resource Mapper (1050) → Signal Generator (1060)

# FIG. 18

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 19

100

140a

Power supply unit

108

110

Communication
unit

120

Control unit

130

Memory unit

140c

I/O unit

Display

140d

Interface unit

140b

# FIG. 20

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

# EP 4 572 453 A1

## INTERNATIONAL SEARCH REPORT

| | International application No. |
|---|---|
| | **PCT/KR2023/011951** |

**A. CLASSIFICATION OF SUBJECT MATTER**

**H04W 72/02**(2009.01)i; **H04W 72/04**(2009.01)i; **H04W 72/542**(2023.01)i; **H04W 72/53**(2023.01)i; **H04W 72/56**(2023.01)i; **H04W 28/26**(2009.01)i; **H04L 1/18**(2006.01)i

According to International Patent Classification (IPC) or to both national classification and IPC

**B. FIELDS SEARCHED**

Minimum documentation searched (classification system followed by classification symbols)

H04W 72/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LTE SL, NR SL, SL RSRP, PSFCH, 임계값(threshold), 중첩(overlap), 자원 (resource)

**C. DOCUMENTS CONSIDERED TO BE RELEVANT**

| Category* | Citation of document, with indication, where appropriate, of the relevant passages | Relevant to claim No. |
|---|---|---|
| Y<br>A | ZTE CORPORATION et al. Discussion on remaining HARQ issues. R2-2004580, 3GPP TSG-RAN WG2 Meeting #110-e. 22 May 2020.<br>See pages 4-5, 8, 12, 14, 17-21, 33 and 36. | 1-4,10,14-20<br>5-9,11-13 |
| Y | INTEL CORPORATION. Inter-UE Coordination Solutions for Sidelink Communication. R1-2200385, 3GPP TSG RAN WG1 #107-bis-e. 11 January 2022.<br>See pages 2, 24-30 and 42. | 1-4,10,14-20 |
| A | MODERATOR (LG ELECTRONICS). Feature lead summary #5 for AI 8.11.2 Inter-UE coordination for Mode 2 enhancements. R1-2205494, 3GPP TSG-RAN WG1 Meeting #109-e. 20 May 2022.<br>See pages 7-8, 30 and 96-98. | 1-20 |
| A | FRAUNHOFER HHI et al. Inter-UE Coordination for Mode 2 Enhancements. R1-2200630, 3GPP TSG RAN WG1 Meeting #107bis-e. 11 January 2022.<br>See pages 7-12. | 1-20 |

☑ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 November 2023** | **22 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/011951** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022-0078753 A1 (LG ELECTRONICS INC.) 10 March 2022 (2022-03-10)<br>See paragraphs [0162]-[0168] and [0250]-[0268]; and figure 14b. | 1-20 |

Form PCT/ISA/210 (second sheet) (July 2022)

INTERNATIONAL SEARCH REPORT
Information on patent family members

International application No.

**PCT/KR2023/011951**

| Patent document cited in search report | Publication date (day/month/year) | Patent family member(s) | Publication date (day/month/year) |
|---|---|---|---|
| US 2022-0078753 A1 | 10 March 2022 | WO 2020-184955 A1 | 17 September 2020 |

Form PCT/ISA/210 (patent family annex) (July 2022)